# EUROPEAN PATENT SPECIFICATION

(11) **EP 4 298 171 B1**
(45) Date of publication and mention of the grant of the patent: **29.01.2025**
(21) Application number: 22705964.9
(22) Date of filing: 07.02.2022
(51) Int. Cl.: C09D 183/04, D21H 19/32

(54) **SILICONE EMULSION AND METHODS FOR THE PREPARATION AND USE THEREOF**
SILIKONEMULSION UND VERFAHREN ZUR HERSTELLUNG UND VERWENDUNG DAVON
ÉMULSION DE SILICONE ET SES PROCÉDÉS DE PRÉPARATION ET D'UTILISATION

(30) Priority: 23.02.2021 US 202163152354 P
(43) Date of publication of application: 03.01.2024
(73) Proprietor: Dow Silicones Corporation, Midland, MI 48686-0994 (US)
(72) Inventor: CHEVALIER, Pierre, 7180 Seneffe (BE); DONTAINE, Cathy, 7180 Seneffe (BE)
(74) Representative: Murgitroyd & Company
(86) International application number: PCT/US2022/015433
(87) International publication number: WO 2022/182501

(56) References cited:
- EP-A2- 0 980 903
- WO-A1-03/029375
- WO-A1-2018/148504

## Description

### TECHNICAL FIELD

This invention pertains to a silicone emulsion and methods for its preparation and use. More particularly, this invention pertains to an aqueous silicone emulsion, which is curable to form a silicone release coating suitable for use on various substrates, including paper and plastic.

### INTRODUCTION

Curable silicone compositions can be coated on substrates and cured to form coatings to improve or change various properties of the substrates. The substrates to which the compositions are applied can contain one or more materials. Such materials can be fibrous, which may be cellulosic, e.g., paper substrates such as paper or cardboard. The paper may be glazed or unglazed, calendared or un-calendared. Alternatively, the substrate can be plastics-based instead of paper-based, comprising for example acrylic, polycarbonate or polyethylene terephthalate material, or it can be a laminate paper/plastics.

Curable silicone compositions can be aqueous, solvent based or solventless compositions. Solventless compositions, such as SYL-OFF ^{™} 7000 Coating from Dow Silicones Corporation of Midland, Michigan, USA, can be applied at a relatively high thickness (≥ 1 µm) and suffer from the drawback that they cannot be coated at reduced thickness using existing coating machinery. Furthermore, due to relatively high viscosities of the solventless compositions, undesirable misting during processing, and surface defects in the resulting coating, can occur particularly at high production speeds.

Aqueous compositions may be desired in several applications such as those requiring well controlled low thickness deposition and those bound to food regulations (e.g., food contact applications). A coated paper suitable for food contact applications may be obtained by treating a paper substrate with a compound or composition for forming a layer on the paper. A known treatment is based on fluorinated compounds that are able to provide non-stick properties by forming a film having low surface energy, which is resistant to chemical agents thereby providing oil, fat and water repellence to the treated paper. However environmental and health concerns were raised about fluorinated compounds, and the industry trend is to restrict or ban their use by various regulations, especially in the food packaging industry.

Another approach has been to treat a paper substrate with a mixture of polyvinyl alcohol and a chromate-fatty acid complex. However the use of heavy metal such as chromium has also raised environmental and health concerns in food packaging related uses. Other treatments may confer some oleophobicity to the paper, but they often require relatively high amounts of material to be effective and form a thick coating on the paper, which may be detrimental to the mechanical properties and durability upon creasing or folding of the paper. Furthermore, use of high amounts of material may not be cost effective.

Silicone-based release coating emulsions which are used for paper and plastic are known and disclosed for example in document EP 0 980 903 A2. In these emulsions are present an inhibitor and PVA as surfactant. However, they do not comprise a polyorganosiloxane having hexenyl functional groups.

### SUMMARY

A silicone release coating emulsion comprises: (A) an aliphatically unsaturated polyorganosiloxane composition comprising a hexenyl-functional polyorganosiloxane, (B) a polyorganohydrogensiloxane, (C) a hydrosilylation reaction catalyst, (D) a hydrosilylation reaction inhibitor, (E) water, (F) a buffer, and one or both of (G) a surfactant and (H) a polyvinyl alcohol.

### DETAILED DESCRIPTION

The silicone release coating emulsion (emulsion) described above may optionally further comprise an additional starting material selected from the group consisting of (I) a biocide, (J) an anti-foam, and (K) a combination of both (I) and (J). Alternatively, the emulsion may consist essentially of (A) the aliphatically unsaturated polyorganosiloxane composition comprising the hexenyl-functional polyorganosiloxane, (B) the polyorganohydrogensiloxane, (C) the hydrosilylation reaction catalyst, (D) the hydrosilylation reaction inhibitor, (E) water, (F) the buffer, and one or both of (G) the surfactant and (H) the polyvinyl alcohol; and optionally the additional starting material selected from the group consisting of (I) the biocide, (J) the anti-foam, and (K) the combination of both (I) and (J). Alternatively, the emulsion may consist of (A) the aliphatically unsaturated polyorganosiloxane composition comprising the hexenyl-functional polyorganosiloxane, (B) the polyorganohydrogensiloxane, (C) the hydrosilylation reaction catalyst, (D) the hydrosilylation reaction inhibitor, (E) water, (F) the buffer, and one or both of (G) the surfactant and (H) the polyvinyl alcohol; and optionally the additional starting material selected from the group consisting of (I) the biocide, (J) the anti-foam, and (K) the combination of both (I) and (J).

### (A) Aliphatically Unsaturated Polyorganosiloxane Composition

Starting material (A) in the emulsion described above is an aliphatically unsaturated polyorganosiloxane composition. The amount of starting material (A) in the emulsion is 100 weight parts. Starting material (A) the aliphatically unsaturated polyorganosiloxane composition comprises (A1) a hexenyl-functional polyorganosiloxane and optionally (A2) a vinyl-functional polyorganosiloxane.

Starting material (A1) is the hexenyl-functional polyorganosiloxane. The hexenyl-functional polyorganosiloxane may have unit formula (A1-I):
(R¹₃SiO_{1/2})ₐ(R¹₂R²SiO_{1/2})_{b}(R¹₂SiO_{2/2})_{c}(R¹R²SiO_{2/2})_{d}(SiO_{4/2})ₑ, where each R¹ is an independently selected alkyl group or aryl group, R² is a hexenyl group, subscript a is 0 to 4, subscript b is 0 to 4, subscript c is 0 to 400, subscript d is 0 to 50, and subscript e is 0 or 1, with the provisos that (a + b) = 2 to 4, (b + d) ≥ 2, (a + b + c + d) is 15 to 400. Suitable alkyl groups for R¹ may have 1 to 6 carbon atoms, such as methyl, ethyl, propyl (including isopropyl and n-propyl), butyl (including n-butyl, t-butyl, sec-butyl, and isobutyl), pentyl (including linear, branched and cyclic 5 carbon groups), and hexyl (including linear, branched and cyclic hexyl groups). Suitable aryl groups include for R¹ may have 6 to 20 carbon atoms, such as phenyl, tolyl, xylyl, naphthyl, and styryl. Alternatively the aryl group may be phenyl. Alternatively, each R¹ may be methyl or ethyl. Alternatively, each R¹ may be methyl or phenyl. Alternatively, each R¹ may be methyl. The hexenyl-functional polyorganosiloxane may be linear or branched.

Alternatively, the hexenyl-functional polyorganosiloxane may be linear, when subscript e = 0. The linear hexenyl-functional polyorganosiloxane may comprise unit formula (A1-II): (R¹₃SiO_{1/2})ₐ(R¹₂R²SiO_{1/2})_{b}(R¹₂SiO_{2/2})_{c}(R¹R²SiO_{2/2})_{d}, where R¹ and R² are as described above, subscript a is 0, 1 or 2; subscript b is 0, 1 or 2; subscript c is 0 to 400; and subscript d is 0 to 50; with the provisos that (a + b) = 2, (b + d) ≥ 2, and (a + b + c + d) is 15 to 400.

Alternatively, the hexenyl-functional polyorganosiloxane may comprise a hexenyl-endblocked polydialkylsiloxane of unit formula (A1-III): (R¹₂R²SiO_{1/2})₂(R¹₂SiO_{2/2})_{c}, where each R¹ is an alkyl group as described above, R² is as described above, and subscript c is 15 to 400.

Alternatively, the hexenyl-functional polyorganosiloxane may comprise a poly(dialkyl/alkylhexenyl)siloxane of unit formula (A1-IV):
(R²R¹₂SiO_{1/2})₂(R¹₂SiO_{2/2})_{c}(R¹R²SiO_{2/2})_{d}, where each R¹ is an alkyl group, R² is as described above, subscript c is 0 to 400, and subscript d is 2 to 50.

Starting material (A1) may comprise a linear hexenyl-functional polyorganosiloxane such as
A1-1) α,ω-dimethylhexenylsiloxy-termmated polydimethylsiloxane,
A1-2) α,ω-dimethylhexenylsiloxy-termmated poly(dimethylsiloxane/methylhexenylsiloxane),
A1-3) α,ω-dimethylhexenylsiloxy-termmated polymethylhexenylsiloxane,
A1-4) α,ω-trimethylsiloxy-terminated poly(dimethylsiloxane/methylhexenylsiloxane),
A1-5) α,ω-trimethylsiloxy-terminated polymethylhexenylsiloxane,
A1-6) α,ω-dimethylhexenyl-siloxy terminated poly(dimethylsiloxane/methylphenylsiloxane/methylhexenylsiloxane),
A1-7) α,ω-dimethylhexenyl-siloxy-terminated poly(dimethylsiloxane/methylphenylsiloxane),
A1-8) α,ω-dimethylhexenyl-siloxy-terminated poly(dimethylsiloxane/diphenylsiloxane), and
A1-9) a combination of two or more of A1-1) to A1-8).

Methods of preparing linear hexenyl-functional polydiorganosiloxanes described above for starting material (A1), such as hydrolysis and condensation of the corresponding organohalosilanes and oligomers or equilibration of cyclic polydiorganosiloxanes, are known in the art, see for example U.S. Patent 3,284,406 to Nelson; U.S. Patent 4,772,515 to Hara et al.; U.S. Patent 5,169,920 to Okawa; U.S. Patent 5,317,072 to Bokerman et al.; and U.S. Patent 6,956,087 Lai et al., which disclose preparing linear polydiorganosiloxanes with alkenyl groups. Hexenyl-functional polydiorganosiloxanes may be prepared by varying appropriate starting materials used in such methods.

In addition to (or instead of) the above described linear hexenyl-functional polydiorganosiloxane, starting material (A1) may comprise a branched hexenyl-functional polyorganosiloxane. The branched hexenyl-functional polyorganosiloxane may have > 0 to 5 mol% of quadrifunctional units when in formula (A1-I), subscript e has a value sufficient to provide > 0 to 5 mol% of quadrifunctional units.

For example, the branched hexenyl-functional polyorganosiloxane may comprise a Q branched polyorganosiloxane of unit formula (A1-V):
(R¹₃SiO_{1/2})_{q}(R¹₂R²SiO_{1/2})ᵣ(R¹₂SiO_{2/2})ₛ(SiO_{4/2})ₜ, where R¹ and R² are as described above, and subscripts q, r, s, and t have average values such that 2 ≥ q ≥ 0, 4 ≥ r ≥ 0, 995 ≥ s ≥ 4, t = 1, (q + r) = 4, and (q + r + s + t) > 50. Alternatively, the quantity (q + r + s + t) may have a value sufficient to impart a viscosity > 170 mPa·s measured by rotational viscometry (as described below with the test methods). Alternatively, viscosity may be > 170 mPa·s to 1000 mPa·s, alternatively > 170 to 500 mPa·s, alternatively 180 mPa·s to 450 mPa·s, and alternatively 190 mPa·s to 420 mPa·s. Suitable branched hexenyl-functional polyorganosiloxanes for starting material (A1) can be made by known methods. For example, the branched hexenyl-functional polyorganosiloxanes for starting material (A1) (where subscript e > 0 in the unit formula above) are exemplified by those disclosed in U.S. Patent 6,806,339 to Cray et al. and U.S. Patent Publication 2007/0289495 to Cray et al. by varying appropriate starting materials.

Starting material (A2) is the vinyl-functional polyorganosiloxane. The vinyl-functional polyorganosiloxane may have unit formula (A2-I):
(R¹₃SiO_{1/2})ᵢ(R¹₂R³SiO_{1/2})_{f}(R¹₂SiO_{2/2})_{g}(R¹R³SiO_{2/2})ₕ(SiO_{4/2})ⱼ, where each R¹ is an independently selected alkyl group or aryl group as described above, R³ is a vinyl group, subscript i is 0 to 4; subscript f is 0 to 4; subscript g is 0 to 1400; subscript h is 0 to 200; and subscript j is 0 or 1; with the provisos that (i + f) = 2 to 4, (f + h) ≥ 2, and (i + f + g + h) is 15 to 1400. Alternatively, subscript g may be 0 to 1200. The vinyl-functional polyorganosiloxane may be linear or branched. For example, when subscript j = 0, the vinyl-functional polyorganosiloxane may be linear.

Alternatively, the linear vinyl-functional polyorganosiloxane may comprise unit formula (A2-II): (R¹₃SiO_{1/2})ᵢ(R¹₂R³SiO_{1/2})_{f}(R¹₂SiO_{2/2})_{g}(R¹R³SiO_{2/2})ₕ, where R¹ is an independently selected alkyl group or aryl group as described above, R³ is a vinyl group, subscript i is 0, 1, or 2; subscript f is 0, 1, or 2; subscript g is 0 to 1200; and subscript h is 0 to 200; with the provisos that (i + f) = 2, (f + h) ≥ 2, (i + f + g + h) is 15 to 1200.

Alternatively, the linear vinyl-functional polyorganosiloxane may comprise a vinyl-endblocked polydialkylsiloxane of unit formula (A2-III) (R¹₂R³SiO_{1/2})₂(R¹₂SiO_{2/2})_{g}, where each R¹ is an alkyl group as described above, R³ is a vinyl group, and subscript g is 15 to 1200.

Alternatively, the linear vinyl-functional polyorganosiloxane may comprise a poly(dialkyl/alkylvinyl)siloxane of unit formula (A2-IV):
(R³R¹₂SiO_{1/2})₂(R¹₂SiO_{2/2})_{g}(R¹R³SiO_{2/2})ₕ, where each R¹ is an alkyl group as described above, R³ is a vinyl group, subscript g is 0 to 1200; subscript h is 2 to 200.

Starting material (A2) may comprise a linear vinyl-functional polyorganosiloxane such as
i) α,ω-dimethylvinylsiloxy-terminated polydimethylsiloxane,
ii) α,ω-dimethylvinylsiloxy-terminated poly(dimethylsiloxane/methylvinylsiloxane),
iii) α,ω-dimethylvinylsiloxy-terminated polymethylvinylsiloxane,
iv) α,ω-trimethylsiloxy-terminated poly(dimethylsiloxane/methylvinylsiloxane),
v) α,ω-trimethylsiloxy-terminated polymethylvinylsiloxane,
vi) α,ω-dimethylvinylsiloxy-terminated poly(dimethylsiloxane/methylphenylsiloxane/methylvinylsiloxane),
vii) α,ω-dimethylvinylsiloxy-terminated poly(dimethylsiloxane/methylphenylsiloxane),
viii) α,ω-dimethylvinylsiloxy-terminated poly(dimethylsiloxane/diphenylsiloxane),
ix) α,ω-phenyl,methyl,vinyl-siloxy-terminated polydimethylsiloxane,
x) a combination of two or more of i) to ix).

Methods of preparing linear vinyl-functional polydiorganosiloxanes described above for starting material (A2), such as hydrolysis and condensation of the corresponding organohalosilanes and oligomers or equilibration of cyclic polydiorganosiloxanes, are known in the art, see for example U.S. Patents 3,284,406; 4,772,515; 5,169,920; 5,317,072; and 6,956,087.

In addition to (or instead of) the above described linear vinyl-functional polydiorganosiloxane, starting material (A2) may comprise a branched vinyl-functional polyorganosiloxane. The branched vinyl-functional polyorganosiloxane may have > 0 to 5 mol% of quadrifunctional units to the branched vinyl-functional polyorganosiloxane. For example, the branched vinyl-functional polyorganosiloxane may unit formula (A2-V):
(R¹₃SiO_{1/2})_{q}(R¹₂R³SiO_{1/2})ᵣ(R¹₂SiO_{2/2})ₛ(SiO_{4/2})ₜ, where R¹ and R³ are as described above, and subscripts q, r, s, and t have average values such that 2 ≥ q ≥ 0, 4 ≥ r ≥ 0, 995 ≥ s ≥ 4, t = 1, (q + r) = 4, and (q + r + s + t) > 50. Alternatively, the quantity (q + r + s + t) may have a value sufficient to impart a viscosity > 170 mPa·s measured by rotational viscometry (as described below with the test methods). Alternatively, viscosity may be > 170 mPa·s to 1000 mPa·s, alternatively > 170 to 500 mPa·s, alternatively 180 mPa·s to 450 mPa·s, and alternatively 190 mPa·s to 420 mPa·s. Suitable branched vinyl-functional polyorganosiloxanes for starting material (A2) are known in the art and can be made by known methods, exemplified by those disclosed in U.S. Patent 6,806,339 and U.S. Patent Publication 2007/0289495.

Starting material (A) the aliphatically unsaturated polyorganosiloxane composition is present in the emulsion in an amount of 100 weight parts (e.g., amount of starting material (A1) and amount of starting material (A2) combined = 100 weight parts). The amount of starting material (A1) the hexenyl-functional polyorganosiloxane in (A) is 25 weight parts to 100 weight parts, and the amount of starting material (A2) in (A) is 0 to 75 weight parts. Alternatively, starting material (A1) may be present in an amount of 25 to < 100 weight parts, alternatively > 25 weight parts to < 100 weight parts, alternatively 50 weight parts to < 100 weight parts, and alternatively > 50 weight parts to < 100 weight parts. Starting material (A2) may be present in an amount of 0 to 75 weight parts, alternatively > 0 to 75 weight parts, alternatively > 0 to < 75 weight parts, alternatively > 0 to 50 weight parts, and alternatively > 0 to < 50 weight parts.

The selection of starting material (A1), starting material (A2) and the amounts of each will depend on various factors including the substrate on which the emulsion will be coated and the desired properties of the release coating prepared from the emulsion. For example, starting material (A1) may be a hexenyl-endblocked polydialkylsiloxane, and starting material (A2) may be a vinyl-endblocked polydialkylsiloxane. Alternatively, starting material (A1) may be a poly(dialkyl/alkylhexenyl)siloxane, and starting material (A2) may be a vinyldialkylsiloxy-endblocked polydialkylsiloxane of unit formula. Alternatively, starting material (A1) may be a poly(dialkyl/alkylhexenyl)siloxane, and starting material (A2) may be a poly(dialkyl/alkylvinyl)siloxane.

Alternatively, when starting material (A1) is a hexenyl-endblocked polydialkylsiloxane and starting material (A2) is a vinyl-endblocked polydialkylsiloxane, the amount of (A1) may be at least 50 weight parts, alternatively at least 75 weight parts, and at the same time up to < 100 weight parts, alternatively up to 90 weight parts; and the amount of (A2) may be > 0 , alternatively at least 10 weight parts and at the same time up to 50 weight parts, alternatively up to 25 weight parts; each provided that the amounts of (A1) and (A2) total 100 weight parts. Alternatively, when starting material (A1) is a poly(dialkyl/alkylhexenyl)siloxane and starting material (A2) is a poly(dialkyl/alkylvinyl)siloxane, the amount of (A1) may be at least > 50 weight parts, alternatively at least 75 weight parts, and alternatively at least 90 weight parts, and at the same time the amount of (A1) may be up to < 100 weight parts, alternatively up to 90 weight parts. And, the amount of (A2) may be at least > 0, alternatively at least 10 weight parts, while at the same time the amount of (A2) may be up to < 50 weight parts, alternatively up to 25 weight parts. The above combinations of (A1) and (A2) may be particularly useful in making emulsions for preparing release coatings on paper substrates.

Alternatively, when starting material (A1) is a poly(dialkyl/alkylhexenyl)siloxane and starting material (A2) is a poly(dialkyl/alkylvinyl)siloxane, the amount of (A1) may be at least > 25 weight parts, alternatively at least 33 weight parts, alternatively at least 50 weight parts, while at the same time the amount of (A1) may be up to < 100 weight parts, alternatively up to 90 weight parts, alternatively up to 75 weight parts and alternatively up to 67 weight parts. And, the amount of (A2) may be at least 10 weight parts, alternatively at least 33 weight parts, alternatively at least 50 weight parts while at the same time the amount of (A2) may be up to 67 weight parts, alternatively up to 50 weight parts. The above combinations of (A1) and (A2) may be particularly useful in making emulsions for preparing release coatings on plastic substrates.

### (B) Polyorganohydrogensiloxane

Starting material (B) in the emulsion is a polyorganohydrogensiloxane. The polyorganohydrogensiloxane may have unit formula (R¹₃SiO_{1/2})_{w}(R¹₂HSiO_{1/2})ₓ(R¹₂SiO_{2/2})_{y}(R¹HSiO_{2/2})_{z}, where R¹ is as described above, subscript w is 0, 1, or 2; subscript x is 0, 1, or 2; subscript y is 0 to 250, and subscript z is 1 to 250; with the provisos that (w + x) = 2; (x + z) ≥ 3; and a quantity (w + x + y + z) is 10 to 300. Alternatively, subscript w may be 2, and subscript x may be 0. Alternatively, subscript y may be > 0 to 250.

Suitable polyorganohydrogensiloxanes for use herein are exemplified by:
(i) α,ω-dimethylhydrogensiloxy-terminated poly(dimethylsiloxane/methylhydrogensiloxane),
(ii) α,ω-dimethylhydrogensiloxy-terminated polymethylhydrogensiloxane,
(iii) α,ω-trimethylsiloxy-terminated poly(dimethylsiloxane/methylhydrogensiloxane),
(iv) α,ω-trimethylsiloxy-terminated polymethylhydrogensiloxane, and
(v) α-dimethylhydrogensiloxy-ω-trimethylsiloxy-terminated poly(dimethylsiloxane/methylhydrogensiloxane),
(vi) α-dimethylhydrogensiloxy-ω-trimethylsiloxy-terminated polymethylhydrogensiloxane, and
(vii) a combination of two or more thereof.

Polyorganohydrogensiloxanes are also commercially available, such as those available from Gelest, Inc. of Morrisville, Pennsylvania, USA, for example, HMS-H271, HMS-071, HMS-993, HMS-301, HMS-301 R, HMS-031, HMS-991, HMS-992, HMS-993, HMS-082, HMS-151, HMS-013, HMS-053, and HMS-HM271. Methods of preparing linear and branched polyorganohydrogensiloxanes suitable for use herein, such as hydrolysis and condensation of organohalosilanes, are well known in the art, as exemplified in U.S. Patent 2,823,218 to Speier, U.S. Patent 3,957,713 to Jeram et al. and U.S. Patent 4,329,273 to Hardman, et al.

Starting material (B) the polyorganohydrogensiloxane is used in the emulsion in an amount sufficient to provide a molar ratio of silicon bonded hydrogen atoms in starting material (B) to a combined amount of vinyl and hexenyl groups in starting material (A) (i.e., an SiH/Vi ratio) of 1.2/1 to 3.0/1, alternatively 1.4/1 to 2.5/1.

### (C) Hydrosilylation Reaction Catalyst

Starting material (C) in the emulsion is a hydrosilylation reaction catalyst. This catalyst will promote a reaction between the alkenyl groups in starting material (A) and the silicon bonded hydrogen atoms in starting material (B). Said catalyst may comprise a metal selected from Fe, Ni, Co, Zr, Ti, or a platinum group metal. Alternatively, the metal may comprise the platinum group metal. The platinum group metal may be selected from the group consisting of platinum, rhodium, ruthenium, palladium, osmium, and iridium. Alternatively, the platinum group metal may be platinum. The hydrosilylation reaction catalyst may be (C-I) a radiation activatable catalyst, *i.e.,* capable of catalyzing hydrosilylation reaction after irradiation (exposure to actinic radiation, e.g., exposure to visible or UV light), (C-II) a hydrosilylation catalyst activatable by means other than irradiation, e.g., capable of catalyzing hydrosilylation reaction without irradiation, such as by heating, or (C-III) a combination of both (C-I) and (C-II).

Suitable radiation activatable catalysts for use as starting material (C-I) may be activated by exposure to radiation with a wavelength of 200 nm to 500 nm. Suitable radiation activatable hydrosilylation reaction catalysts include cyclopentadienyl platinum complexes such as η5-cyclopentadienyl)tri(α-alkyl)platinum (IV); cyclopentadienyltrimethylplatinum and trimethyl(methylcyclopentadienyl)platinum(IV), cyclooctadienyl platinum complexes such as η4-1,5-cyclooctadienediarylplatinum complexes; and Pt(II)-β diketonate complexes such as bis(acetylacetonato)platinum (II). Examples of cyclopentadienyl platinum complexes are known in the art and are disclosed, for example in U.S. Patent 4,510,094 to Drahnak; U.S. Patent 4,600,484 to Drahnak; U.S. Patent 4,916,169 to Boardman et al.; U.S. Patent 6,127,446 to Butts; U.S. Patent 6,451,869 to Butts; U.S. Patent 6,376,569 to Oxman et al.; U.S. Patent 8,088,878 to Koellnberger; and CN101925608B. Cyclooctadienyl platinum complexes are disclosed, for example, in U.S. Patent 6,046,250 to Boardman et al. Platinum (II) beta-diketonate catalysts are disclosed, for example, in EP0398701B1 to Oxman et al.; U.S. Patent 8,642,674 to Ikeno; and CN104031602A. U.S. Patent Application Publication 2005/0154079 to Walker et al.; U.S. Patent Application Publication 2011/0171400A1 to Thompson et al. and JP 03865638 B2 to Ikeno each disclose various radiation activatable hydrosilylation reaction catalysts as well.

Alternatively, the hydrosilylation reaction catalyst may be (C-II) a hydrosilylation catalyst activatable by means other than irradiation. For example, (C-II) may be (C-II-1) the platinum group metal, described above; (C-II-2) a compound of such a metal, for example, chloridotris(triphenylphosphane)rhodium(I) (Wilkinson's Catalyst), a rhodium diphosphine chelate such as [1,2-bis(diphenylphosphino)ethane]dichlorodirhodium or [1,2-bis(diethylphospino)ethane]dichlorodirhodium, chloroplatinic acid (Speier's Catalyst), chloroplatinic acid hexahydrate, platinum dichloride, and (C-II-3) a complex of a compound, (C-II-2), with an alkenyl functional organopolysiloxane oligomer, or (C-II-4) a platinum group metal compound microencapsulated in a matrix or coreshell type structure. Complexes of platinum with alkenyl functional organopolysiloxane oligomers include 1,3-diethenyl-1,1,3,3-tetramethyldisiloxane complexes with platinum (Karstedt's Catalyst) and Pt(0) complex in tetramethyltetravinylcyclotetrasiloxane (Ashby's Catalyst). Alternatively, the hydrosilylation reaction catalyst may be (C-II-5) a compound or complex, as described above, microencapsulated in a resin matrix. Specific examples of suitable platinum-containing catalysts for (C-II) include chloroplatinic acid, either in hexahydrate form or anhydrous form, or a platinum-containing catalyst which is obtained by a method comprising reacting chloroplatinic acid with an aliphatically unsaturated organosilicon compound such as divinyltetramethyldisiloxane, or alkene-platinum-silyl complexes as described in U.S. Patent 6,605,734 to Roy. These alkene-platinum-silyl complexes may be prepared, for example by mixing 0.015 mole (COD)PtCl₂ with 0.045 mole COD and 0.0612 moles HMeSiCl₂, where COD represents cyclooctadienyl and Me represents methyl. Other exemplary hydrosilylation reaction catalysts are described in U.S. Patents 2,823,218 to Speier; 3,159,601 to Ashby; 3,220,972 to Lamoreaux; 3,296,291 to Chalk, et al.; 3,419,593 to Willing; 3,516,946 to Modic; 3,814,730 to Karstedt; 3,928,629 to Chandra; 3,989,668 to Lee, et al.; 4,766,176 to Lee, et al.; 4,784,879 to Lee, et al.; 5,017,654 to Togashi; 5,036,117 to Chung, et al.; and 5,175,325 to Brown; and EP 0 347 895 A to Togashi, et al. U.S. Patent Application Publication 2019/0367744 to Chevalier et al. discloses both (C-II) radiation activatable catalysts and (C-II) catalysts activatable by means other than radiation (e.g., heat activatable catalysts). Other hydrosilylation reaction catalysts that may be used herein are as disclosed in "Hydrosilylation reaction of olefins: recent advances and perspectives," by Y. Nakajima and S. Shimada, RSC Adv., 2015, 5, 20603-20616 and "Hydrosilylation, Advances in Silicon Science," Chapter 1, Hydrosilylation of Alkenes and Their Derivatives, B. Marciniec (ed.) DOI 10.1007/978-1-4020-8172-9 1, © Springer Science+Business Media B.V. 2009 (pp. 2-49). Suitable hydrosilylation reaction catalysts for starting material (C-II) are commercially available, for example, SYL-OFF^{™} 4000 Catalyst and SYL-OFF^{™} 2700 are available from Dow Silicones Corporation of Midland, Michigan, USA.

Starting material (C) may be one hydrosilylation reaction catalyst or a combination of two or more of the hydrosilylation reaction catalysts described above. For example, starting material (C) may be a combination of (C-I) and (C-II), e.g., when both exposure to radiation and heating will be used for hydrosilylation reaction. Alternatively, starting material (C) may be a combination of two or more radiation activatable catalysts, such as a combination of a cyclopentadienyl platinum complex and a Pt(II)-β diketonate complex. One skilled in the art would recognize that certain catalyst species may be activated by either irradiating or heating, as described herein and that when a combination of two or more catalysts is used, the catalyst species selected will differ from one another.

The amount of (C) the hydrosilylation reaction catalyst in the emulsion will depend on various factors including the selection of starting materials (A) and (B); and their respective contents of alkenyl groups and silicon bonded hydrogen atoms, and the amount of (D) hydrosilylation reaction inhibitor present in the composition, however, the amount of catalyst is sufficient to catalyze hydrosilylation reaction of SiH and alkenyl groups, alternatively the amount of catalyst is sufficient to provide at least 10 ppm, alternatively at least 15 ppm, alternatively at least 20 ppm, alternatively at least 50 ppm, and alternatively at least 100 ppm, by mass of the platinum group metal based on combined amounts of starting materials (A), (B), (C), (D), (E), (F), and (G) in the composition. At the same time, the amount of catalyst is sufficient to provide up to 1,000 ppm, alternatively up to 800 ppm, alternatively up to 500 ppm, and alternatively up to 100 ppm by mass of the platinum group metal, based on combined weights of starting materials (A) and (B) in the emulsion.

### (D) Hydrosilylation Reaction Inhibitor

Starting material (D) in the emulsion is a hydrosilylation reaction inhibitor. Starting material (D) is a hydrosilylation reaction inhibitor (inhibitor) that may be used for altering the hydrosilylation reaction, as compared to a composition containing the same starting materials but with the inhibitor omitted. Starting material (D) may be, for example, (D1) an acetylenic alcohol, (D2) a silylated acetylenic alcohol, (D3) an ene-yne compound, (D4) a triazole, (D5) a phosphine, (D6) a mercaptan, (D7) a hydrazine, (D8) an amine, (D9) a fumarate, (D10) a maleate, (D11) an ether, (D12) carbon monoxide, (D13) an alkenyl-functional siloxane oligomer, and (D14) a combination of two or more thereof. Alternatively, the hydrosilylation reaction inhibitor may be selected from the group consisting of (D1) an acetylenic alcohol, (D2) a silylated acetylenic alcohol, (D9) a fumarate, (D10) a maleate, (D13) a combination of two or more thereof. Alternatively, the hydrosilylation reaction inhibitor may be selected from the group consisting of (D1) an acetylenic alcohol, (D2) a silylated acetylenic compound, (D9) a fumarate, (D10) a maleate, (D13) carbon monoxide, and (D14) a combination of two or more thereof.

Acetylenic alcohols are exemplified by 3,5-dimethyl-1-hexyn-3-ol, 1-butyn-3-ol, 1-propyn-3-ol, 2-methyl-3-butyn-2-ol, 3-methyl-1-butyn-3-ol, 3-methyl-1-pentyn-3-ol, 3-phenyl-1-butyn-3-ol, 4-ethyl-1-octyn-3-ol, 3,5-dimethyl-1-hexyn-3-ol, and 1-ethynyl-1-cyclohexanol, and a combination thereof. Alternatively, the inhibitor may be a silylated acetylenic compound. Without wishing to be bound by theory, it is thought that adding a silylated acetylenic compound reduces yellowing of the reaction product prepared from hydrosilylation reaction as compared to a reaction product from hydrosilylation of starting materials that do not include a silylated acetylenic compound or that include an organic acetylenic alcohol inhibitor, such as those described above. The silylated acetylenic compound is exemplified by (3-methyl-1-butyn-3-oxy)trimethylsilane, ((1,1-dimethyl-2-propynyl)oxy)trimethylsilane, bis(3-methyl-1-butyn-3-oxy)dimethylsilane, bis(3-methyl-1-butyn-3-oxy)silanemethylvinylsilane, bis((1,1-dimethyl-2-propynyl)oxy)dimethylsilane, methyl(tris(1,1-dimethyl-2-propynyloxy))silane, methyl(tris(3-methyl-1-butyn-3-oxy))silane, (3-methyl-1-butyn-3-oxy)dimethylphenylsilane, (3-methyl-1-butyn-3-oxy)dimethylhexenylsilane, (3-methyl-1-butyn-3-oxy)triethylsilane, bis(3-methyl-1-butyn-3-oxy)methyltrifluoropropylsilane, (3,5-dimethyl-1-hexyn-3-oxy)trimethylsilane, (3-phenyl-1-butyn-3-oxy)diphenylmethylsilane, (3-phenyl-1-butyn-3-oxy)dimethylphenylsilane, (3-phenyl-1-butyn-3-oxy)dimethylvinylsilane, (3-phenyl-1-butyn-3-oxy)dimethylhexenylsilane, (cyclohexyl-1-ethyn-1-oxy)dimethylhexenylsilane, (cyclohexyl-1-ethyn-1-oxy)dimethylvinylsilane, (cyclohexyl-1-ethyn-1-oxy)diphenylmethylsilane, (cyclohexyl-1-ethyn-1-oxy)trimethylsilane, and combinations thereof. The silylated acetylenic compound useful as the inhibitor herein may be prepared by methods known in the art, for example, U.S. Patent 6,677,407 to Bilgrien, et al. discloses silylating an acetylenic alcohol described above by reacting it with a chlorosilane in the presence of an acid receptor.

Alternatively, the inhibitor may be an ene-yne compound such as 3-methyl-3-penten-1-yne; 3,5-dimethyl-3-hexen-1-yne; and a combination thereof. Alternatively, the inhibitor may comprise a triazole, exemplified by benzotriazole. Alternatively, the inhibitor may comprise a phosphine. Alternatively, the inhibitor may comprise a mercaptan. Alternatively, the inhibitor may comprise a hydrazine. Alternatively, the inhibitor may comprise an amine. Amines are exemplified by tetramethyl ethylenediamine, 3-dimethylamino-1-propyne, n-methylpropargylamine, propargylamine, 1-ethynylcyclohexylamine, or a combination thereof. Alternatively, the inhibitor may comprise a fumarate. Fumarates include dialkyl fumarates such as diethyl fumarate, dialkenyl fumarates such as diallyl fumarate, dialkoxyalkyl fumarates such as bis-(methoxymethyl)ethyl fumarate. Alternatively, the inhibitor may comprise a maleate. Maleates include dialkyl maleates such as diethyl maleate, dialkenyl maleates such as diallyl maleate, and dialkoxyalkyl maleates such as bis-(methoxymethyl)ethyl maleate. Alternatively, the inhibitor may comprise an ether.

Alternatively, the inhibitor may comprise carbon monoxide. Alternatively, the inhibitor may comprise an alkenyl-functional siloxane oligomer, which may be cyclic or linear such as methylvinylcyclosiloxanes exemplified by 1,3,5,7-tetramethyl-1,3,5,7-tetravinylcyclotetrasiloxane, 1,3,5,7-tetramethyl-1,3,5,7-tetrahexenylcyclotetrasiloxane, 1,3-divinyl-1,3-diphenyl-1,3-dimethyldisiloxane; 1,3-divinyl-1,1,3,3-tetramethyldisiloxane; and a combination of two or more thereof. The compounds useful as inhibitors described above are commercially available, e.g., from Sigma-Aldrich Inc. or Gelest, Inc., and Suitable inhibitors for use herein are exemplified by those described as stabilizer E in U.S. Patent Application Publication 2007/0099007 at paragraphs [0148] to [0165].

Starting material (D) may be one hydrosilylation reaction inhibitor or a combination of two or more of the hydrosilylation reaction inhibitors described above. The amount of inhibitor used will depend on various factors including the desired reaction rate, the particular inhibitor used, and the selection and amounts of each of starting materials (A) to (C). However, when present, the amount of inhibitor may be > 0 parts by mass, alternatively 0.02 weight part to 0.8 weight part, per 100 weight parts of starting material (A).

### (E) Water

Starting material (E) is water, which is not generally limited, and may be utilized neat (i.e., without any carrier vehicles/solvents), and/or pure (i.e., free of minerals and/or other impurities). For example, the water may be processed or unprocessed prior to its combination with other starting materials in the emulsion. Examples of processes that may be used for purifying the water include distilling, filtering, deionizing, and combinations of two or more thereof, such that the water may be deionized, distilled, and/or filtered. Alternatively, the water may be unprocessed (e.g. may be tap water, i.e., provided by a municipal water system or well water, used without further purification). The water may be utilized in any amount, which will be selected by one of skill in the art, depending on various factors, including the desired dilution of the emulsion. However, the amount of water may be 30% to 99%, alternatively 50% to 99%, alternatively 50% to 95%, based on combined weights of all starting materials in the emulsion.

### (F) Buffer System

A buffer system (buffer) for maintaining a desired pH of the emulsion may be any suitable buffer, which may comprise a mono or polyprotic acid and its conjugate base. For example, a buffer comprising HCO₃⁻/CO₃²⁻ and H₂PO₄⁻/HPO₄²⁻ described as agent F in U.S. Patent Application Publication 2007/0099007 at paragraphs [00145] to [00147] may be used herein. The buffer may comprise NaCO₃ and NaHCO₃; and/or citric acid and a citrate salt such as potassium citrate or sodium citrate. The amount of the buffer may be > 0, alternatively at least 0.2 weight parts and alternatively at least 0.4 weight parts, per 100 weight parts of starting material (A). At the same time, the amount of buffer may be up to 1.6 weight parts, alternatively up to 1.5 weight parts, alternatively up to 1.25 weight parts, per 100 parts of starting material (A).

### (G) Surfactant

The surfactant used to emulsify may be nonionic or ionic. Alternatively, the surfactant may be nonionic. Suitable surfactants may be selected from may be selected from those that are known and the art and are commercially available. Suitable nonionic surfactants include alkylphenols, fatty alcohols or fatty acids with alkylene oxide groups, such as ethylene oxide or propylene oxide groups. Suitable ionic surfactants include anionic surfactants such as sulfates, sulfonates, phosphates, and sulfosuccinates. Suitable surfactants for use herein are exemplified by those described as surfactant (G) in U.S. Patent Application Publication 2007/0099007 at paragraphs [0167] to [0176]. The amount of surfactant depends on various factors, including whether starting material (H) the polyvinyl alcohol compound, is present, however the amount of surfactant may be 0 to 3 weight parts, per 100 weight parts of starting material (A), alternatively from 0 to 2 weight parts, alternatively from 0 to 1 weight parts, alternatively from 0 to 0.3 weight parts.

### (H) Polyvinyl Alcohol

Starting material (H) in the emulsion is a polyvinyl alcohol compound. Polyvinyl alcohol compounds are known in the art and are disclosed, for example in U.S. Patent Application Publication 2007/0099007 at paragraphs [0172] and [0173]. Polyvinyl alcohol compounds may be made by saponification of polyvinylacetate, so up to 15 % of polyvinylacetate may remain in the polyvinyl alcohol compound used herein. Alternatively, the polyvinyl alcohol compound may be 80% to 98% polyvinyl alcohol (with the balance being 20% to 2% polyvinylacetate). The polyvinyl alcohol compound may have a minimum viscosity of 5 cP at 4 % aqueous solution at 20 °C. The amount of the polyvinyl alcohol compound depends on various factors, including whether starting material (G) the surfactant, is present, however the amount of polyvinyl alcohol may be 0 to 10 weight parts, alternatively 0 to 5 weight parts, and alternatively 0 to 3.0 weight parts, per 100 weight parts of starting material (A). However, at least one of (G) the surfactant and (H) the polyvinyl alcohol is present in the emulsion. The amount of (G), (H), or the combination of both (G) and (H) may be at least 5.0 weight part per 100 parts by weight of starting material (A).

### (I) Biocide

Starting material (I) is an optional biocide that may be added to the emulsion. Biocides are known in the art, for example, the biocide is exemplified by (I1) a fungicide, (I2) an herbicide, (I3) a pesticide, (I4) an antimicrobial agent, and a combination of two or more thereof. Exemplary biocides are disclosed, for example, in U.S. Patent 9,221,041 to Brandstadt, et al. The biocide is optional. However, when used, the biocide may be present in an amount up to 1.0 weight parts, per 100 weight parts of starting material (A).

### (J) Anti-Foam

The emulsion may optionally further comprise starting material (J) an anti-foaming agent (anti-foam). The amount of starting material (J) may be up to 0.2 weight parts, per 100 weight parts of starting material (A). Suitable anti-foams are exemplified by emulsions containing silica and polydimethylsiloxanes. Such anti-foams are commercially available from Dow Silicones Corporation of Midland, Michigan, USA.

### Additional Starting Materials

One or more additional starting materials may be added to the emulsion described herein. The one or more additional starting materials may be selected from the group consisting of a bactericidal agent (e.g., sorbic acid), a colorant (e.g., dye or pigment), a filler (e.g., silica), and a wetting agent (e.g., a glycol such as propylene glycol or ethylene glycol). Suitable additional starting materials for use herein are exemplified by the additives described in U.S. Patent Application Publication 2007/0099007 at paragraphs [0177] to [0190] and U.S. Patent Application Publication 2002/0061365 at paragraphs [0055] to [0056].

Notwithstanding the description above, the emulsion described herein is free of stabilizers selected from aliphatic polyethers, (co)polyacrylamides, polysaccharides, and polyacrylates. These stabilizers are long and flexible hydrophilic macromolecules of high molecular weights. As used herein, "free of stabilizers selected from aliphatic polyethers, (co)polyacrylamides, polysaccharides, and polyacrylates" means that such macromolecules are not intentionally added to the emulsion. The emulsion may contain none, or a non-detectable amount, of such macromolecules. If any such macromolecules are present in one or more of the starting materials used in the emulsion, any amount is insufficient to change the properties of any release coating prepared from the emulsion.

The emulsion described herein is also free of unreactive organopolysiloxanes. As used herein, "unreactive organopolysiloxanes" are polysiloxanes, which do not undergo hydrosilylation reaction with starting materials (A) and (B). Such unreactive organopolysiloxanes may have formula (R¹)ₑSiO_{(4-e)/2}, where R¹ = monovalent, optionally substituted hydrocarbon radicals with 1 to 10 carbon atoms from the group consisting of substituted and unsubstituted alkyl, phenyl, and phenylalkyl radicals which may be the same or different within the molecule, and e may be integers between 1 and 3. Examples of unreactive organopolysiloxanes are α,ω-trialkylsiloxy-terminated polydialkylsiloxanes, such as α,ω-trimethylsiloxy-terminated polydimethylsiloxanes. As used herein, "free of unreactive organopolysiloxanes" means that such unreactive organopolysiloxanes are not intentionally added to the emulsion. The emulsion may contain none, or a non-detectable amount, of such unreactive organopolysiloxanes. If any such unreactive organopolysiloxanes are present as impurities in one or more of the starting materials used in the emulsion, any amount thereof is insufficient to change the properties of any release coating prepared from the emulsion. Without wishing to be bound by theory, it is thought that the presence of unreactive organopolysiloxanes in release coatings prepared from the emulsion described herein may be detrimental to the performance of the release coating by, for example, by increasing extractables and/or decreasing anchorage on certain substrates as compared to release coatings prepared from emulsions which are free of unreactive organopolysiloxanes.

The emulsion may be prepared by combining the starting materials described above, in the amounts described above, in any order of addition, optionally with a master batch, and optionally under shear. Alternatively, the emulsion may be formed by subjecting said starting materials to high shear, for example in a mixer of the rotor and stator type or in an apparatus applying increased shear such as a high pressure homogenizer, microfluidizer, colloid mill, or sonolator (ultrasonic mixer). To avoid premature reaction during formation of the emulsion, some of the starting materials may be emulsified separately. For example, all or a portion of starting material (A) may be emulsified in the absence of starting material (B), starting material (B) being added subsequently. Alternatively, starting materials (A) and (B) may be emulsified in the absence of catalyst, with the catalyst being emulsified and added separately.

The present invention also provides a process of preparing a coated substrate with the emulsion. The method comprises disposing the emulsion on a surface of the substrate. The method further comprises curing at an elevated temperature, such as 50 °C to 120 °C to remove water and cure starting materials (A) and (B), thereby giving the coated substrate.

The emulsion may be disposed or dispensed on the surface of the substrate in any suitable manner. Typically, the emulsion is applied in wet form via a wet coating technique. In certain embodiments, the emulsion is applied by i) spin coating; ii) brush coating; iii) drop coating; iv) spray coating; v) dip coating; vi) roll coating; vii) flow coating; viii) slot coating; ix) gravure coating; or x) a combination of any of i) to ix). Typically, disposing the emulsion on the substrate results in a wet deposit on the substrate, which is subsequently dried and cured to give the coated substrate, which comprises a cured silicone release coating on the substrate.

The substrate is not limited and may be any substrate. The substrate may have an integrated hot plate or an integrated or stand-alone furnace for drying and curing the deposit. The substrate may optionally have a continuous or non-continuous shape, size, dimension, surface roughness, and other characteristics. In certain embodiments, the substrate has a softening point temperature at the elevated temperature.

The substrate may comprise a plastic, which maybe a thermosetting and/or thermoplastic. Alternatively, the substrate may comprise a paper, which may be suitable for food contact applications. Specific examples of suitable substrates include polyamides (PA); polyesters such as polyethylene terephthalates (PET), polybutylene terephthalates (PET), polytrimethylene terephthalates (PTT), polyethylene naphthalates (PEN), and liquid crystalline polyesters; polyolefins such as polyethylenes (PE), polypropylenes (PP), and polybutylenes; styrenic resins; polyoxymethylenes (POM); polycarbonates (PC); polymethylenemethacrylates (PMMA); polyvinyl chlorides (PVC); polyphenylene sulfides (PPS); polyphenylene ethers (PPE); polyimides (PI); polyamideimides (PAI); polyetherimides (PEI); polysulfones (PSU); polyethersulfones; polyketones (PK); polyetherketones (PEK); polyvinyl alcohols (PVA); polyetheretherketones (PEEK); polyetherketoneketones (PEKK); polyarylates (PAR); or polyethernitriles (PEN); celluloses such as triacetylcellulose, diacetylcellulose, or cellophane; and paper such as Kraft paper.

The emulsion, or wet deposit, is typically dried and cured at the elevated temperature for a period of time. The period of time is typically sufficient to effect curing, i.e., cross-linking, of starting materials comprising (A) and (B). In certain embodiments, the period of time is from greater than 0 to 8 hours, alternatively from greater than 0 to 2 hours, alternatively from greater than 0 to 1 hour, alternatively from greater than 0 to 30 minutes, alternatively from greater than 0 to 15 minutes, alternatively from greater than 0 to 10 minutes, alternatively from greater than 0 to 5 minutes, alternatively from greater than 0 to 2 minutes. The period of time depends on various factors including the elevated temperature selected, desired film thickness, and amount of water.

Curing typically has a dwell time of 1 to 50 seconds; alternatively 2 to 10 seconds. Dwell time, as used herein, refers to the time during which the starting materials comprising (A) and (B) are subjected to the elevated temperature. Dwell time is distinguished from cure time, as there may be ongoing curing even after the wet deposit, or partially cured reaction intermediary thereof is no longer subjected to the elevated temperature, which typically initiates curing. Alternatively, the coated article may be prepared on a conveyor belt in an oven, and the dwell time may be calculated by dividing a length of the oven (e.g., in meters) by a line speed of the conveyor belt (e.g., in meters/sec).

The period of time may be broken down into cure iterations, e.g., a first-cure and a post-cure, with the first-cure being, for example, one hour and the post cure being, for example, three hours. The elevated temperature may be independently selected from any temperature above room temperature in such iterations and may be the same in each iteration.

Depending on a thickness and other dimensions of the film and coated substrate, the coated substrate can be formed via an iterative process. For example, a first deposit may be formed and subjected to a first elevated temperature for a first period of time to give a partially cured deposit. Then, a second deposit may be disposed on the partially cured deposit and subjected to a second elevated temperature for a second period of time to give a second partially cured deposit. The partially cured deposit will also further cure during exposure to the second elevated temperature for the second period of time. A third deposit may be disposed on the second partially cured deposit and subjected to a third elevated temperature for a third period of time to give a third partially cured deposit. The second partially cured deposit will also further cure during exposure to the second elevated temperature for the second period of time. This process may be repeated, for example, from 1 to 50 times, to build the coated article as desired. A composite is of partially cured layers is typically subjected to a final post-cure, e.g. at the elevated temperature and period of time above. Each elevated temperature and period of time may be independently selected and may be the same as or different from one another. When the article is formed via the iterative process, each deposit may also be independently selected and may differ in terms of components selected in the composition and/or their amounts. Alternatively still, each iterative layer may be fully cured, rather than only being partially cured, in such an iterative process.

The deposit may comprise a wet film, and the iterative process may be wet-on-wet, depending on a cure state of the partially cured layer. Alternatively, the iterative process may be wet-on-dry. The coated substrate, which comprises the film formed from the emulsion on the substrate, may have varying dimensions, including relative thicknesses of the film and the substrate. When cured, the resulting silicone release coating has a thickness that may vary depending upon its end use application. Typically, the silicone release coating has a thickness of from greater than 0 to < 1 µm, alternatively from greater than 0 to 0.9 µm, alternatively from greater than 0 to 0.75 µm, alternatively from greater than 0 to 0.5 µm, alternatively from greater than 0 to 0.25 µm, alternatively from greater than 0 to 0.2 µm. However, other thicknesses are contemplated, e.g. from 0.05 µm to 0.2 µm. For example, the thickness of the film may be from 0.1 µm to 10 µm; alternatively from 0.15 µm to 5 µm; alternatively from 0.2 µm to 2 µm; and alternatively from 0.2 µm and 0.6 µm. Alternatively, when the substrate is plastic, the film may have a thickness of from 0.05 to < 1 µm, alternatively from 0.05 to 0.9 µm, alternatively from 0.05 to 0.8 µm. Alternatively, when the substrate is paper, the film may have a thickness of from 0.2 to < 1 µm, alternatively from 0.2 to 0.9 µm, alternatively from 0.2 to 0.8 µm, alternatively from 0.2 µm to 0.7 µm, alternatively from 0.2 µm to 0.6 µm; alternatively 0.2 µm to 0.5 µm; and alternatively from 0.2 µm to 0.3 µm.

The coated substrate may be utilized in diverse end use applications. For example, the coated substrate may be utilized in coating applications, packaging applications, adhesive applications, fiber applications, fabric or textile applications, construction applications, transportation applications, (opto)electronics applications such as device fabrication, electrical applications, photonics applications, and food contact applications such as bakery release. Alternatively, when the substrate is paper, the coated substrate may be used in food contact applications such as bakery release. Alternatively, when the substrate is plastic, the coated substrate may be used in (opto)electronics applications such as device fabrication.

### EXAMPLES

These examples are intended to illustrate the invention to one of ordinary skill in the art and are not to be construed as limiting the invention set forth in the claims. The starting materials used in these examples are described below in Table 1.

**Table 1 - Starting Materials**

| Starting Material | Chemical Description | Source |
|---|---|---|
| (A-2-1) | Linear vinyldimethylsiloxy-endblocked polydimethylsiloxane with vinyl content 0.6% and viscosity 250 cSt (Vi EB PDMS) | 2-7038 from DSC |
| (A-2-2) | Linear vinyldimethylsiloxy-endblocked poly(dimethyl/methylvinyl)siloxane with vinyl content 0.5% and viscosity 220 cSt (Vi EB/MF PDMS) | 2-7748 from DSC |
| (A-2-3) | Vinyldimethylsiloxy-endblocked poly(dimethyl/methylvinyl) siloxane branched polymer with vinyl content 1.5% and viscosity 97 cSt (Vinyl EB/MF Q branched PDMS) | 7758 from DSC |
| (A-1-1) | Linear hexenyldimethylsiloxy-endblocked polydimethylsiloxane with hexenyl content 0.7% and viscosity 200 cSt (Hex EB PDMS) | 7692 from DSC |
| (A-1-2) | Linear hexenyldimethylsiloxy-endblocked poly(dimethyl/methylhexenyl)siloxane with hexenyl content 1.0 % and viscosity 380 cSt (Hex EB/MF PDMS) | 7690 from DSC |
| (B-1) | Linear trimethylsiloxy-terminated poly(dimethyl/methylhydrogen)siloxane with SiH content 0.9 % SiH and viscosity 31 cSt (SiH MF PDMS) | 7672 from DSC |
| (B-2) | Linear trimethylsiloxy-terminated poly(dimethyl/methylhydrogen)siloxane with SiH content 0.9% and viscosity 67 cSt (SiH MF PDMS) | 7678 from DSC |
| 200 Fl, Unreactive Organopolysiloxane | Trimethylsiloxy-terminated polydimethylsiloxane (EB PDMS) with viscosity 350 cSt | DOWSIL^{™} 200 FLUID from DSC |
| 200 Fl, Unreactive Organopolysiloxane | Trimethylsiloxy-terminated polydimethylsiloxane (EB PDMS) with viscosity 12,500 cSt | DOWSIL^{™} 200 FLUID from DSC |
| E-1 | Water | |
| C-1 | Catalyst emulsion containing vinyl-terminated polydimethylsiloxane with vinyl content 0.42% Vi and Pt SYL-OFF^{™} 7924 Coating | DSC |
| C-2 | Catalyst emulsion containing vinyl-terminated polydimethylsiloxane with vinyl content 0.6% Vi and Pt SYL-OFF^{™} 7975 Coating | DSC |
| J-1 | Antifoam emulsion containing silica and polydimethylsiloxanes DOWSIL^{™} 7989 | DSC |

Starting materials with the DOWSIL^{™} and SYL-OFF trademarks are commercially available from DSC, which means Dow Silicones Corporation of Midland, Michigan, USA. Reference Example A - Vi/Hexenyl content and SiH content measured by NMR

NMR spectroscopy was used to determine the vinyl content, hexenyl content and SiH content of starting materials in Table 1 as follows. Nuclear Magnetic Resonance (NMR) spectra were obtained on a NMR BRUKER AVIII (400 MHz), using a silicon-free 10 mm tube and CDCl₃/Cr(AcAc)₃ solvent. Chemical shifts for ²⁹Si-NMR spectra were referenced to internal solvent resonance and are reported relative to tetramethylsilane.

### Reference Example B - Dynamic Viscosity (cSt)

Dynamic viscosity of starting materials in Table 1 was measured as follows. Dynamic viscosity (DV) was measured with a Brookfield Viscometer DV-I Prime equipped with spindle 2 to 4, at speed from 20 to 100 rpm and at a temperature of 25 °C.

In this Reference Example 1, samples of base emulsions were prepared by combining the starting materials and their amounts as shown below in the tables. Amounts of each starting material are in weight %. The preparation of base emulsion was made in the lab. The pH buffered water containing water, citric acid monohydrate and sodium hydroxide was first weighed and blended. The polymers were weighed and blended separately, and the surfactants were added under mixing. The buffered water was then poured and stirred for 5 minutes. The premix was then emulsified using the High Pressure Sonolator at 100 bars until targeted particle size was reached. The recovered quantity was blended with the hydrosilylation inhibitor and the biocide package.

**Table 2 - Comparative Base Emulsions (amounts are in weight %)**

| Starting Material | 1 | 2 | 3 | 5 | 6 | 7 |
|---|---|---|---|---|---|---|
| | | | | | | |
| (A-2-1) | 38.36 | 0 | 36.44 | 38 | 37.05 | 0 |
| (A-2-2) | 0 | 38.71 | 0 | 0 | 0 | 0 |
| (A-2-3) | 0 | 0 | 0 | 0 | 0 | 36.24 |
| (B-1) | 1.64 | 1.29 | 1.56 | 2 | 1.95 | 3.76 |
| 200 Fl 350cSt | 0 | 0 | 2 | 0 | 1 | 0 |
| % solids | 40 | 40 | 40 | 40 | 40 | 40 |
| SiH/Vi ratio | 1.47 | 1.53 | 1.47 | 1.81 | 1.81 | 1.7 |

**Table 3 - Additional Base Emulsions**

| Starti ng Mat'l | 8 | 9 | 10 | 11 | 12 | 13 | 14 | 15 | 16 | 17 | 18 | 19 | 20 |
|---|---|---|---|---|---|---|---|---|---|---|---|---|---|
| (A-2-1) | 0 | 0 | 0 | 0 | 0 | 0 | 0 | 34.5 2 | 28.7 7 | 19.1 8 | 9.59 | 3.84 | 0 |
| (A-2-2) | 0 | 34.8 | 0 | 19.4 | 0 | 3.9 | 0 | 0 | 0 | 0 | 0 | 0 | 0 |
| (A-1-1) | 38.4 | 0 | 36.5 | 0 | 37.5 | 0 | 0 | 3.84 | 9.6 | 19.1 9 | 28.7 9 | 34.5 4 | 38.3 8 |
| (A-1-2) | 0 | 3.9 | 0 | 19.4 | 0 | 34.8 | 38.7 | 0 | 0 | 0 | 0 | 0 | 0 |
| (B-1-1) | 1.57 | 1.29 | 1.49 | 0 | 1.52 | 0 | 0 | 1.64 | 1.64 | 1.63 | 1.62 | 1.62 | 1.62 |
| 200 Fl 350 cSt | 0 | 0 | 0 | 0 | 1 | 0 | 0 | 0 | 0 | 0 | 0 | 0 | 0 |
| 200 Fl 12500 cSt | 0 | 0 | 2 | 0 | 0 | 0 | 0 | 0 | 0 | 0 | 0 | 0 | 0 |
| % Solids | 40 | | 40 | | 40 | | | 40 | 40 | 40 | 40 | 40 | 40 |
| SiH/ Vi ratio | 1.43 | 1.53 | 1.43 | 1.53 | 1.42 | 1.53 | 1.53 | 1.70 | 1.70 | 1.70 | 1.70 | 1.70 | 1.70 |
| (A1): (A2) ratio | 100: 0 | 10:9 0 | 100: 0 | 50:5 0 | 100: 0 | 90:1 0 | 100: 0 | 10:9 0 | 25:7 5 | 50:5 0 | 75:2 5 | 90:1 0 | 100: 0 |

**Table 4 - Additional Base Emulsions**

| Starting Materia l | 21 | 22 | 23 | 24 | 25 | 26 | 27 | 28 |
|---|---|---|---|---|---|---|---|---|
| (A-2-1) | 25.18 | 12.59 | 0 | 0 | 0 | 0 | 0 | 0 |
| (A-2-3) | 0 | 0 | 32.62 | 27.18 | 18.12 | 9.06 | 3.62 | 0 |
| (A-1-2) | 12.68 | 25.00 | 3.75 | 9.36 | 18.73 | 28.09 | 33.71 | 37.45 |
| (B-1) | 2.14 | 2.41 | 3.64 | 3.46 | 3.16 | 2.85 | 2.67 | 2.55 |
| % solids | 40 | 40 | 40 | 40 | 40 | 40 | 40 | 40 |
| SiH/Vi ratio | 1.81 | 1.81 | 1.70 | 1.70 | 1.70 | 1.70 | 1.70 | 1.70 |
| (A1):(A 2) ratio | 33:67 Hex EB/MF: Vi EB | 67:33 Hex EB/MF: Vi EB | 10:90 Hex EB/MF: Vi EB/MF | 25:75 Hex EB/MF: Vi EB/MF | 50:50 Hex EB/MF: Vi EB/MF | 75:25 Hex EB/MF: Vi EB/MF | 90:10 Hex EB/MF: Vi EB/MF | 100% Hex EB/M F |

In this Reference Example 2, samples of emulsions (Bath/ Emulsion) were prepared as follows: A base emulsion prepared as described in Reference Example 1 was combined with a catalyst emulsion (C-1) or (C-2), water, and an antifoam, which are described in Table 1. Amounts in weight parts are shown in Table 5.

**Table 5 - Emulsions**

| Starting Materials | Bath/ Emulsion 1 | Bath/ Emulsion 2 |
|---|---|---|
| Base Emulsion | 95 | 90 |
| Catalyst emulsion (C-1) | 0 | 10 |
| Catalyst emulsion (C-2) | 5 | 0 |
| Water (E-1) | 430 | 430 |
| Antifoam (J-1) | 0.3 | 0.3 |
| Total | 530.3 | 530.3 |

In this Reference Example 3, bakery paper substrates were treated with emulsions prepared as described in Reference Example 2 with an average silicon coat weight of 0.32 g/m². Silicon coat weight, post-cure extractables, water uptake, and anchorage were evaluated as follows:

Silicon coat weights were measured by X-ray Fluorescence using an Oxford lab-x3500 XRF Analyzer after silicon elemental calibration with samples' standards. An XRF measure of a blank substrate was performed prior to 3 measures of coated-paper samples leading to an average silicon coat weight or thickness expressed in g/m².

The water resistance of paper substrates was tested by the conventional absorption test known as Cobb test described for instance in TAPPI 441 om-04 test method. Samples were exposed to water for 45 seconds and the amount of water absorbed after a total of 60 seconds was measured by the weight. The "Cobb value" represented the mass of absorbed water expressed in g/m². The lower the Cobb value, the higher the water resistance of the substrate. A Cobb value of less than 20 g/m² was desired by some customers, and a Cobb value less than 15 g/m² was desired by other customers.

The anchorage test provided a quantitative determination of the rub-off resistance of silicone release coating anchoring on the substrate after an abrasion test. The silicon content of a coated substrate was determined by XRF before and after rub-off with an abrasion tester and was expressed as a % of Si left after rub-off compared to 100% initially coated. The higher the Si % left after rub-off the higher the anchorage or abrasion resistance.

Silicone extractables in % of a coated paper was measured by its silicone CW before vs. after (20 min) immersion in MIBK. The solvent dissolves uncured silicone and the percentage loss is determined. This test is carried out immediately after the paper was coated and after 24 h aging at RT, called immediate extractable ('IM Ext') and post-cure extractable (`PC Ext'). The results are reported in Table 6.

**Table 6 - Results on Bakery Paper, with an average silicon coat weight of 0.32 g/m²**

| Base Emulsion Sample # used to prepare the release coating | 1 | 3 | 8 | 10 | 12 | Performance Target |
|---|---|---|---|---|---|---|
| Alkenyl Functional Polyorganosiloxane in the Base Emulsion | 100% Vi EB PDMS | Vi EB PDMS + 2% PDMS | 100% Hex EB PDMS | Hex EB PDMS + 2% PDMS | Hex EB PDMS + 1% PDMS | |
| Extractables % | 3.8 | 8.9 | 8.1 | 8.4 | 7.7 | < 10 |
| Water uptake (Cobb, g/m²) | 16.7 | 15.9 | 13.1 | 13.8 | 12.5 | < 15 |
| Anchorage (%) | 82.7 | 91.3 | 92.2 | 90.6 | 92.9 | > 85 |

The results in Table 6 showed that the comparative samples, which did not contain a hexenyl-functional polyorganosiloxane *(i.e.,* 1 and 3) produced release coatings with insufficient anchorage or water uptake that was higher than desired for a bakery paper application.

The release coating made with the emulsion containing sample 8 from Table 3 showed much higher anchorage (92.2 vs. 82.7%) thus better abrasion resistance than sample 1 from Table 2. Without wishing to be bound by theory, it is thought that when a hexenyldimethylsiloxy-endblocked polydimethylsiloxane was used (in sample 8) instead of a vinyldimethylsiloxy-endblocked polydimethylsiloxane (in sample 1), higher anchorage (higher abrasion resistance) reduced the dust formation. The water uptake, or Cobb value, was also significantly lower (13.1 vs. 16.7 g/m²) when a hexenyldimethylsiloxy-endblocked polydimethylsiloxane was used instead of a vinyldimethylsiloxy-endblocked polydimethylsiloxane, and higher water resistance is a benefit for food contact applications; e.g. for release of steam from food and water resistance for frozen food.

Samples 10 and 12 from Table 3, contained 1% or 2% unreactive trimethylsiloxy-endblocked PDMS, respectively, and produced release coatings with similar to superior anchorage compared to that produced by sample 3 (90.6 and 92.9 vs. 91.3%) with again a significant reduction in water uptake (13.8 and 12.5 vs. 15.9 g/m²).

In this Reference Example 4, bakery papers were treated with emulsions prepared as described in Reference Example 2 with an average silicon coat weight of 0.44 g/m². The resulting samples were evaluated as described above in Reference Example 3. In addition, air barrier and baking residues were evaluated as follows.

The air permeability of different paper substrates was measured with an L&W Air Permeability Tester by sensing the air flow through the sample and the pressure difference across the two sides. Standard test methods SCAN-P 26:78 or TAPPI 536 om-12 for 'Resistance of paper to passage of air (high-pressure Gurley method)' was applied. The air permeability was expressed in Gurley seconds or Gurley unit. The higher the time in Gurley, the lower the air permeability of a paper specimen, the better the air barrier.

The bakery release or baking test measured the quantity of food left on a substrate after oven baking and release. Coated paper samples were folded into molds and weighed. Cake dough containing 4 eggs, 80 g of sugar, 80 and 85 g of potato and wheat flours respectively, and 5.5 g of baking powder were processed at room temperature with a universal kitchen machine and placed into the molds prior to oven baking. The finished baked products were cooled down. The coated paper to be tested was then removed from the baked product and the quantity of baked product still adhering to the paper was weighed and converted in g/m². The lower the bakery release values the better. The results are reported in Table 7.

**Table 7 - Release Coatings Prepared with Base Emulsions having both a Vinyldimethylsiloxy-endblocked Polydimethylsiloxane and a Hexenyldimethylsiloxy-endblocked Polydimethylsiloxane Compared to Release Coatings Prepared with Base Emulsions having either a Vinyldimethylsiloxy-endblocked Polydimethylsiloxane or a Hexenyldimethylsiloxy-endblocked Polydimethylsiloxane with an average silicon coat weight of 0.44 g/m²**

| Sample # | 1 | 15 | 16 | 17 | 18 | 19 | 20 | Performanc e Target |
|---|---|---|---|---|---|---|---|---|
| Alkenyl Functional Polyorganosiloxa ne in the Base Emulsion | 100% Vi EB PDM S | 10:90 Hex EB PDMS : Vi EB PDMS | 25:75 Hex EB PDMS : Vi EB PDMS | 50:50 Hex EB PDMS : Vi EB PDMS | 75:25 Hex EB PDMS : Vi EB PDMS | 90:10 Hex EB PDMS : Vi EB PDMS | 100% Hex EB PDM S | |
| Post-Cure Extractables % | 1.4 | 2.2 | 2.7 | 3.3 | 2.6 | 3.0 | 2.2 | < 10 |
| Anchorage (%) | 81.9 | 80.8 | 83.9 | 87.0 | 92.1 | 91.6 | 92.7 | > 85 |
| Water uptake (Cobb, g/m²) | 11.3 | 12.1 | 12.1 | 12.7 | 13.2 | 12.8 | 12.9 | < 15 |
| Air barrier (Gurley) | 833 | / | 764 | / | 937 | / | 1,137 | the higher the best |
| Baking residues (g/m²) | 9.4 | / | 17.7 | / | 20.5 | / | 30.5 | < 50 |

The results in Table 7 show that the release coating made with Sample 1 from Table 2 suffered from the drawback of a low abrasion resistance as evidenced by low anchorage of 81.9% and a low air barrier of 833. By increasing the content of the hexenyldimethylsiloxy-endblocked polydimethylsiloxane over the vinyldimethylsiloxy-endblocked polydimethylsiloxane in the base emulsions, abrasion resistance (anchorage) was increased, as shown by the release coatings prepared with samples 15-18 from Table 3. Without wishing to be bound by theory, it is thought that that under the conditions tested, a maximum value for anchorage was achieved when the ratio of hexenyldimethylsiloxy-endblocked polydimethylsiloxane to vinyldimethylsiloxy-endblocked polydimethylsiloxane was reached in sample 18 because of increasing the amount of hexenyldimethylsiloxy-endblocked polydimethylsiloxane to 90% or 100% (with a corresponding decrease of vinyldimethylsiloxy-endblocked polydimethylsiloxane to 10% or to 0) in samples 19 and 20, respectively, did not significantly change anchorage. The data in Table 7 further shows that as the amount of hexenyldimethylsiloxy-endblocked polydimethylsiloxane increased from 75% to 100%, the air barrier property improved (increased), but baking residues property was detrimentally impacted (increased). However, samples 15-20 produced coated papers suitable for use for preparing bakery papers.

In this Reference Example 5, bakery papers were treated with emulsions prepared as described in Reference Example 2 with an average silicon coat weight of 0.45 g/m². The resulting samples were evaluated as described above in Reference Example 3. The results are shown below in Table 8.

**Table 8 - Release Coatings Prepared with Base Emulsions having a Vi-functional Polyorganosiloxane, a Hex-functional Polyorganosiloxane, or Both**

| Sample # | 2 | 9 | 11 | 13 | 14 | Performance Target |
|---|---|---|---|---|---|---|
| Alkenyl Functional Polyorganosiloxane in the Base Emulsion | 100% Vi EB/MF PDMS | 10:90 Hex EB/MF PDMS :Vi EB/MF PDMS | 50:50 Hex EB/MF PDMS:Vi EB/MF PDMS | 90:10 Hex EB/MF PDMS:Vi EB/MF PDMS | 100% Hex EB/MF PDMS | |
| Extractables % | 18.9 | 16.3 | 16.3 | 9.5 | 8.4 | < 10 |
| Anchorage (%) | 85.9 | 85.9 | 87.2 | 90.4 | 86.8 | > 85 |
| Water uptake (Cobb, g/m²) | 13.2 | 13.2 | 12.7 | 12.4 | 12.8 | < 15 |

Varying the relative amounts of vinyldimethylsiloxy-terminated poly(dimethyl/methylvinyl)siloxane and hexenyldimethylsiloxy-terminated poly(dimethyl/methylhexenyl)siloxane was evaluated, and the results are shown above in Table 8. The combination of both polyorganosiloxanes dramatically improved cure (as shown by a drop in post cure extractables % from 18.9 using only a vinyldimethylsiloxy-terminated poly(dimethyl/methylvinyl)siloxane in the base emulsion, down to 9.5 when a 90:10 ratio of hexenyldimethylsiloxy-terminated poly(dimethyl/methylhexenyl)siloxane and vinyldimethylsiloxy-terminated poly(dimethyl/methylvinyl)siloxane was used), improved anchorage from 85.9 up to 90.4 and positively reduced water uptake from 13.2 down to 12.4. These examples showed that when only 10% hexenyldimethylsiloxy-terminated poly(dimethyl/methylhexenyl)siloxane was used in the base emulsion formulated into a release coating composition on a paper substrate, the resulting release coating did not have the desired water uptake for a food contact application. Surprisingly, the best performance under the conditions tested herein was obtained when a combination of 90% hexenyldimethylsiloxy-terminated poly(dimethyl/methylhexenyl)siloxane and 10% vinyldimethylsiloxy-terminated poly(dimethyl/methylvinyl)siloxane was used because this sample (13) produced a release coating with the lowest water uptake and highest anchorage of the samples tested (including sample 2, which used 100% vinyldimethylsiloxy-terminated poly(dimethyl/methylvinyl)siloxane (no hexenyl) and 14, which used 100% hexenyldimethylsiloxy-terminated poly(dimethyl/methylhexenyl)siloxane (no vinyl).

In this Reference Example 6, PET film substrates were treated with emulsions prepared as described in Reference Example 2 with an average silicon coat weight of 0.2 g/m². A combination of a vinyl-functional polyorganosiloxane and a hexenyl-functional polyorganosiloxane was used in base emulsions. The resulting samples were evaluated as described above in Reference Example 3. The results are shown below in Table 9.

**Table 9 - Comparison of Release Coatings Prepared Using Base Emulsions with Various Viand Hex- functional Polyorganosiloxanes**

| Sample # | 5 | 6 | 7 | 21 | 22 | Performance Target |
|---|---|---|---|---|---|---|
| Alkenyl Functional Polyorganosiloxane in Base Emulsion | 100% Vinyl EB PDMS | Vinyl EB PDMS + 1% PDMS | 100% Vinyl EB/MF PDMS | 33:67 Hex EB/MF PDMS: Vi EB PDMS | 67:33 Hex EB/MF PDMS: Vi EB PDMS | |
| Extractables % | 10.4 | 12.4 | 8.3 | 2.6 | 1.2 | < 5 |
| Anchorage (%) | 30.2 | 22.2 | 41.9 | 72.2 | 67.8 | > 25 |

The release coatings prepared from emulsions containing vinyldimethylsiloxy-endblocked polydimethylsiloxanes (5 and 6) showed high extractables (over 10%) and poor (low) anchorage to (and thus poor abrasion resistance on) PET films. Sample 6, which included 1% trimethylsiloxy-endblocked polydimethylsiloxane had even worse anchorage and extractables than Sample 5, which did not include a trimethylsiloxy-endblocked polydimethylsiloxane. Although sample 7 had a decrease in extractables as compared to samples 5 and 6, the extractables of sample 7 were still higher than desired (> 5%), and the anchorage value of 41.9% was still quite low. Without wishing to be bound by theory, it is thought that the presence of an unreactive organopolysiloxane (such as the 1% of trimethylsiloxy-endblocked polydimethylsiloxane in sample 6) will detrimentally affect (increase) extractables in release coatings prepared from emulsions containing even small amounts of unreactive organopolysiloxanes (e.g., 1% to 2%). Therefore, the emulsions described herein are free of unreactive organopolysiloxanes (such as the trimethylsiloxy-endblocked polydimethylsiloxanes described in Table 1).

Release coatings prepared from samples 21 and 22 (which included a combination of a hexenyldimethylsiloxy-endblocked poly(dimethyl/methylhexenyl)siloxane and a vinyldimethylsiloxy-endblocked polydimethylsiloxane) had the lowest extractables and consequently the highest abrasion resistance of the samples tested in Table 9. Without wishing to be bound by theory, it is thought that lowering extractables was due to the addition of the polyorganosiloxane with the hexenyl group.

In this Reference Example 7, the study in Reference Example 6 was repeated under different coating conditions (average coat weight of 0.2 g/m²) focusing at using a poly(dimethyl/methylhexenyl)siloxane blended at different ratios with a poly(dimethyl/methylvinyl)siloxane.

Table 10 below shows that again the release coating made from sample 7 (which contained a vinyldimethylsiloxy-endblocked poly(dimethyl/methylvinyl)siloxane and no hexenyl-functional polyorganosiloxane) had the lowest anchorage (lowest abrasion resistance) under the conditions tested. The anchorage increased with increasing amount of hexenyldimethylsiloxy-endblocked poly(dimethyl/methylhexenyl)siloxane in the base emulsion. At a 50:50 ratio of poly(dimethyl/methylvinyl)siloxane : poly(dimethyl/methylhexenyl)siloxane, the anchorage more than doubled, then plateaued above that ratio.

**Table 10 - Release Coatings Prepared from Emulsions with varying levels of poly(dimethyl/methylhexenyl)siloxane and poly(dimethyl/methylvinyl)siloxane**

| Sample # | 7 | 23 | 24 | 25 | 26 | 27 | 28 | Perform. Target |
|---|---|---|---|---|---|---|---|---|
| Alkenyl Functional Polyorganosiloxane in the Base Emulsion | 100% Vi EB/ MF PDMS | 10:90 Hex EB/MF PDMS: Vi EB/MF PDMS | 25:75 Hex EB/MF PDMS: Vi EB/MF PDMS | 50:50 Hex EB/MF PDMS: Vi EB/MF PDMS | 75:25 Hex EB/MF PDMS: Vi EB/MF PDMS | 90:10 Hex EB/MF PDMS: Vi EB/MF PDMS | 100% Hex EB/MF PDMS | |
| Extractables % | 3.0 | 4.1 | 3.3 | 3.0 | 3.8 | 3.6 | 3.9 | < 5 |
| Anchorage (%) | 18.4 | 25.7 | 36.1 | 41.0 | 44.8 | 41.4 | 36.7 | > 25 |

In Table 10, an optimum of performance was found at a 50:50 ratio of the poly(dimethyl/methylhexenyl)siloxane : poly(dimethyl/methylvinyl)siloxane in the base emulsion. Without wishing to be bound by theory, this further demonstrates that including both a hexenyl-functional polyorganosiloxane and a vinyl-functional polyorganosiloxane in the base emulsion leads to a release coating on a PET film substrate with benefits to one or more of the extension of the cure (lowered extractables), and increased anchorage (increased abrasion resistance).

Without wishing to be bound by theory, it is further thought that combining a hexenyl-functional polyorganosiloxane, particularly a poly(dimethyl/methylhexenyl)siloxane and a vinyl-functional polyorganosiloxane in an emulsion as described herein may provide one or more benefits (over a comparable release coating emulsion containing the vinyl-functional polyorganosiloxane but not the hexenyl-functional polyorganosiloxane), particularly on plastic film substrates such as PET. For example, it is thought that cure speed improves, extractables will decrease by a factor up to 5, anchorage will increase by a factor up to two.

### Industrial Applicability

*Problems to be Addressed:* The use of silicone emulsions for coating paper substrates for food contact applications, thereby providing the paper substrate, e.g., bakery paper, with release performance and water resistance is desired as an attractive alternative to the health concerns related to fluorinated materials and chromium containing materials for the same application. However, paper machine in-line runnability issues, such as dust formation has been a major difficulty for the use of silicone emulsions.

Furthermore, the use of silicone emulsions for coating other substrates, such as plastic films, is also desirable for many applications, including but not limited to labels, general tapes and liners for sun block film and water proofing tapes. Furthermore, release liners with a release coating on a plastic film substrate also find use in the (opto)electronics industry where a release coating with a smooth surface and minimal or no dust is desired. There are industry needs for silicone emulsions, which are stable, and which can be cured to form release coatings with high SAS (Subsequent Adhesion Strength) and low and stable release force.

*Solution:* The silicone emulsion described herein is versatile in that it can be used to prepare a release coating on various substrates, including both paper substrates and plastic film substrates. The silicone emulsion described herein can be used to prepare a release coating on a paper substrate suitable for food contact applications. The silicone emulsion can be applied to a paper substrate and cured to form a release coating thereon with no or minimal dust formation (as shown in the examples above where the anchorage test method described above shows a high percentage of silicone release coating remaining on the substrate after the test.

Furthermore, the silicone release coating emulsion described herein has lower viscosity than previously disclosed solventless curable silicone compositions. Without wishing to be bound by theory, it is thought that the emulsion described herein enables better control of the thickness of the silicone release coating to be prepared, and a lower range of thicknesses, at the same coating speeds used for solventless processes, and with no mist observed during the process of applying the emulsion to the substrate. This can provide environmental, health, and safety benefits, financial benefits in lower costs of production, and coating quality benefits (in that eliminating mist reduces or eliminates surface defects). Furthermore, the thin layer of silicone release coating achieved on paper substrates may make the coated papers more favorable for composting/recycling as less silicone release coating is deposited on the surface of the substrate. Furthermore, the emulsion described herein may produce silicone release coatings with additional technical advantages over solventless curable silicone compositions due to thinner coating, faster cure, and deeper section cure, than achievable with a thicker solventless coating. Furthermore the emulsion described herein may produce a silicone release coating with other benefits (as compared to a coating produced with a solventless curable silicone composition), such as lower extractables, thereby minimizing migration onto food or sensitive (opto)electronic components that could be contaminated, anchorage/abrasion resistance above 90%, low/no mist, lower dust formation, and/or lower cost. Furthermore, the emulsion described herein produces a smooth silicone release coating surface with lower coating weight, which can minimize risks of blocking issues. This is both important for, e.g., bakery paper during oven baking or microwaving to have a thin/breathable substrate to let the vapor out for proper cooking, and also for multilayer ceramic capacitor (MLCC) and polarizer film applications to have high quality coatings. The emulsion described herein may also allow hydrophilic additives to be added, such as anti-static additives, or anchorage additives such as alkoxyorganosilanes, which are not readily soluble or dispersible in solventless viscous curable silicone compositions.

### Definitions and Usage of Terms

In this application, all amounts, ratios, and percentages are by weight unless otherwise indicated. The amounts of all starting materials in an emulsion or other composition total 100% by weight. The articles 'a', 'an', and 'the' each refer to one or more, unless otherwise indicated by the context of specification. The singular includes the plural unless otherwise indicated. The transitional phrases "comprising", "consisting essentially of", and "consisting of" are used as described in the Manual of Patent Examining Procedure Ninth Edition, Revision 08.2017, Last Revised January 2018 at section §2111.03 I., II., and III. The abbreviations used herein have the definitions in Table 11

The following abbreviations used in this application have the definitions described below in Table 11.

**Table 11 - Abbreviations**

| Abbreviation | Definition |
|---|---|
| AcAc | Acetyl acetonate |
| °C | degrees Celsius |
| cP | centipoise |
| cSt | centistoke |
| CW | Coat weight |
| EB | Endblocked |
| g | Gram |
| h | Hour |
| Hex | Hexenyl |
| m² | Meters squared |
| Me | Methyl |
| MF | Multi-functional, indicates that a polyorganosiloxane has pendant functional (e.g., alkenyl) groups |
| MIBK | Methyl isobutyl ketone |
| mPa·s | milliPascal seconds |
| PDMS | Polydimethylsiloxane |
| Ppm | Parts per million |
| Rpm | Revolutions per minute |
| RT | Room temperature of 25 ± 2 °C |
| Q | A quadrifunctional siloxane unit of formula (SiO_{4/2}) (silicate unit) |
| µm | Micrometer |
| Vi | Vinyl |
| XRF | X-ray Fluorescence |

## Claims

1. A silicone release coating emulsion comprising
(A) 100 weight parts of an aliphatically unsaturated polyorganosiloxane composition comprising
(A1) 25 weight parts to 100 weight parts of a hexenyl-functional polyorganosiloxane of unit formula (R¹₃SiO_{1/2})ₐ(R¹₂R²SiO_{1/2})_{b}(R¹₂SiO_{2/2})_{c}(R¹R²SiO_{2/2})_{d}(SiO_{4/2})ₑ, where R¹ is an alkyl group, R² is a hexenyl group, subscript a is 0 to 4, subscript b is 0 to 4, subscript c is 0 to 400, subscript d is 0 to 50, and subscript e is 0 or 1, with the provisos that (a + b) = 2 to 4, (b + d) ≥ 2, (a + b + c + d) is 15 to 400, and
(A2) 0 to 75 weight parts of a vinyl-functional polyorganosiloxane of unit formula (R¹₃SiO_{1/2})ᵢ(R¹₂R³SiO_{1/2})_{f}(R¹₂SiO_{2/2})_{g}(R¹R³SiO_{2/2})ₕ(SiO_{4/2})ⱼ, where R¹ is an alkyl group, R³ is a vinyl group, subscript i is 0 to 4; subscript f is 0 to 4; subscript g is 0 to 1400; subscript h is 0 to 200; and subscript j is 0 or 1; with the provisos that (i + f) = 2 to 4, (f + h) ≥ 2, and (i + f + g + h) is 15 to 1400;
(B) a polyorganohydrogensiloxane, in an amount sufficient to provide a molar ratio of silicon bonded hydrogen atoms in starting material (B) to a combined amount of vinyl and hexenyl groups in starting material (A) (i.e., an SiH/Vi ratio) of 1.2/1 to 3.0/1;
(C) a hydrosilylation reaction catalyst in an amount sufficient to provide 10 to 1000 ppm of a platinum group metal based on combined weights of starting materials (A) and (B);
(D) 0.02 weight part to 0.8 weight part, per 100 weight parts of starting material (A), of a hydrosilylation reaction inhibitor;
(E) water;
(F) 0.4 weight part to 1.6 weight parts, per 100 weight parts of starting material (A), of a buffer;
(G) 0 to 3.0 weight parts, per 100 weight parts of starting material (A), of a surfactant; and
(H) 0 to 10.0 weight parts, per 100 weight parts of starting material (A), of a polyvinyl alcohol,
with the proviso that combined amounts of starting materials (G) and (H) is ≥ 0.1 weight part, per 100 parts by weight of starting material (A); and
with the proviso that the emulsion is free of stabilizers selected from aliphatic polyethers, (co)polyacrylamides, polysaccharides, and polyacrylates and free of unreactive organopolysiloxanes.

2. The emulsion of claim 1, where (B) the polyorganohydrogensiloxane has unit formula (R¹₃SiO_{1/2})_{w}(R¹₂HSiO_{1/2})ₓ(R¹₂SiO_{2/2})_{y}(R¹HSiO_{2/2})_{z}, where subscript w is 0, 1, or 2; subscript x is 0, 1, or 2; subscript y is 0 to 250, and subscript z is 1 to 250; with the provisos that (w + x) = 2; (x + z) ≥ 3; and a quantity (w + x + y + z) is 10 to 300.

3. The emulsion of claim 1, where (C) the hydrosilylation reaction catalyst is selected from the group consisting of (C1) a metal selected from the group consisting of platinum, rhodium, ruthenium, palladium, osmium, and iridium; (C2) a compound of the metal; (C3) a complex of the metal or the compound; and (C4) the compound or the complex microencapsulated in a resin matrix or coreshell type structure.

4. The emulsion of claim 1, where (D) the hydrosilylation reaction inhibitor is selected from the group consisting of (D1) an acetylenic alcohol, (D2) a silylated acetylenic alcohol, (D3) an eneyne compound, (D4) a triazole, (D5) a phosphine, (D6) a mercaptan, (D7) a hydrazine, (D8) an amine, (D9) a fumarate, (D10) a maleate, (D11) an ethers, (D12) carbon monoxide, and (D13) a combination of two or more thereof.

5. The emulsion of claim 1, where starting material (F) comprises a mono- or poly- protic acid and its conjugate base.

6. The emulsion of claim 1, where starting material (G) is present and comprises a nonionic surfactant.

7. The emulsion of claim 1, where starting material (H) the polyvinyl alcohol is present.

8. The emulsion of claim 1, further comprising a starting material selected from the group consisting of (I) up to 1.0 weight parts, per 100 weight parts of starting material (A), of a biocide, (J) up to 0.2 weight parts, per 100 weight parts of starting material (A), of an anti-foam, or both (I) and (J).

9. The emulsion of any one of the preceding claims, where:
starting material (A1) the hexenyl-functional polyorganosiloxane comprises unit formula (R¹₃SiO_{1/2})ₐ(R¹₂R²SiO_{1/2})_{b}(R¹₂SiO_{2/2})_{c}(R¹R²SiO_{2/2})_{d}, where subscript a is 0, 1 or 2; subscript b is 0, 1 or 2; subscript c is 0 to 400; and subscript d is 0 to 50; with the provisos that (a + b) = 2 to 4, (b + d) ≥ 2, and (a + b + c + d) is 15 to 400; and
starting material (A2) the vinyl-functional polyorganosiloxane comprises unit formula (R¹₃SiO_{1/2})ᵢ(R¹₂R³SiO_{1/2})_{f}(R¹₂SiO_{2/2})_{g}(R¹R³SiO_{2/2})ₕ, where subscript i is 0, 1, or 2; subscript f is 0, 1, or 2; subscript g is 0 to 1200; and subscript h is 0 to 200; with the provisos that (i + f) = 2, (f + h) ≥ 2, (i + f + g + h) is 15 to 1200.

10. The emulsion of claim 9, where:
starting material (A1) is 50 weight parts to < 100 weight parts of a hexenyl-endblocked polydialkylsiloxane of unit formula (R¹₂R²SiO_{1/2})₂(R¹₂SiO_{2/2})_{c}, where subscript c is 15 to 400; and
starting material (A2) is > 0 to 50 weight parts of a vinyl-endblocked polydialkylsiloxane of unit formula (R¹₂R³SiO_{1/2})₂(R¹₂SiO_{2/2})_{g}, where subscript g is 15 to 1200.

11. The emulsion of claim 9, where:
starting material (A1) is > 50 weight parts to < 100 weight parts of a poly(dialkyl/alkylhexenyl)siloxane of unit formula (R²R¹₂SiO_{1/2})₂(R¹₂SiO_{2/2})_{c}(R¹R²SiO_{2/2})_{d}, where subscript c is 0 to 400, subscript d is 2 to 50, and
starting material (A2) is > 0 to < 50 weight parts of a poly(dialkyl/alkylvinyl)siloxane of unit formula (R³R¹₂SiO_{1/2})₂(R¹₂SiO_{2/2})_{g}(R¹R³SiO_{2/2})ₕ, where subscript g is 0 to 1200; subscript h is 2 to 200.

12. Use of the emulsion of claim 10 or claim 11 on a paper substrate.

13. The emulsion of claim 9, where:
starting material (A1) is > 25 weight parts to < 100 weight parts of a poly(dialkyl/alkylhexenyl)siloxane of unit formula (R²R¹₂SiO_{1/2})₂(R¹₂SiO_{2/2})_{c}(R¹R²SiO_{2/2})_{d}, where subscript c is 0 to 400, subscript d is 2 to 50, and
starting material (A2) is > 0 to < 75 weight parts of a poly(dialkyl/alkylvinyl)siloxane of unit formula (R³R¹₂SiO_{1/2})₂(R¹₂SiO_{2/2})_{g}(R¹R³SiO_{2/2})ₕ, where subscript g is 0 to 1200; subscript h is 2 to 200.

14. The emulsion of claim 9, where:
starting material (A1) is a poly(dialkyl/alkylhexenyl)siloxane of unit formula (R²R¹₂SiO_{1/2})₂(R¹₂SiO_{2/2})_{c}(R¹R²SiO_{2/2})_{d}, where subscript c is 0 to 400; and subscript d is 2 to 50; and
starting material (A2) is a vinyldialkylsiloxy-endblocked polydialkylsiloxane of unit formula (R¹₂R³SiO_{1/2})₂(R¹₂SiO_{2/2})_{g}, where R¹ is an alkyl group, R³ is a vinyl group, and subscript g is 15 to 1200.

15. Use of the emulsion of claim 13 or claim 14 on a plastic substrate.

## Patentansprüche

1. Silikontrennbeschichtungsemulsion, umfassend
(A) 100 Gewichtsteile einer aliphatisch ungesättigten Polyorganosiloxanzusammensetzung, umfassend
(A1) zu 25 Gewichtsteile bis 100 Gewichtsteile ein hexenylfunktionelles Polyorganosiloxan von Einheitsformel
(R¹₃SiO_{1/2})ₐ(R¹₂R²SiO_{1/2})_{b}(R¹₂SiO_{2/2})_{c}(R¹R²SiO_{2/2})_{d}(SiO_{4/2})ₑ, wobei R¹ eine Alkylgruppe ist, R² eine Hexenylgruppe ist, Index a 0 bis 4 ist, Index b 0 bis 4 ist, Index c 0 bis 400 ist, Index d 0 bis 50 ist und Index e 0 oder 1 ist, mit den Maßgaben<, dass (a + b) = 2 bis 4, (b + d) ≥ 2, (a + b + c + d) 15 bis 400 ist, und
(A2) zu 0 bis 75 Gewichtsteile ein vinylfunktionelles Polyorganosiloxan von Einheitsformel (R¹₃SiO_{1/2})ᵢ(R¹₂R³SiO_{1/2})_{f}(R¹₂SiO_{2/2})_{g}(R¹R³SiO_{2/2})ₕ(SiO_{4/2})ⱼ, wobei R¹ eine Alkylgruppe ist, R³ eine Vinylgruppe ist, Index i 0 bis 4 ist; Index f 0 bis 4 ist; Index g 0 bis 1400 ist; Index h ist 0 bis 200 ist; und Index j 0 oder 1 ist; mit den Maßgaben, dass (i + f) = 2 bis 4, (f + h) ≥ 2 und (i + f + g + h) 15 bis 1400 ist;
(B) ein Polyorganohydrogensiloxan in einer Menge, die ausreicht, um ein Molverhältnis von an Silizium gebundenen Wasserstoffatomen in einem Ausgangsmaterial (B) zu einer kombinierten Menge von Vinyl- und Hexenylgruppen in dem Ausgangsmaterial (A) (d. h. ein SiH/Vi-Verhältnis) von 1,2/1 bis 3,0/1 bereitzustellen;
(C) einen Hydrosilylierungsreaktionskatalysator in einer Menge, die ausreicht, um 10 bis 1000 ppm eines Platingruppenmetalls basierend auf kombinierten Gewichten der Ausgangsmaterialien (A) und (B) bereitzustellen;
(D) zu 0,02 Gewichtsteile bis 0,8 Gewichtsteile pro 100 Gewichtsteile Ausgangsmaterial (A) ein Hydrosilylierungsreaktionsinhibitor;
(E) Wasser;
(F) zu 0,4 Gewichtsteile bis 1,6 Gewichtsteile, pro 100 Gewichtsteile Ausgangsmaterial (A), ein Puffer; (G) zu 0 bis 3,0 Gewichtsteile, pro 100 Gewichtsteile Ausgangsmaterial (A), ein Tensid; und (H) zu 0 bis 10,0 Gewichtsteile, pro 100 Gewichtsteile Ausgangsmaterial (A), ein Polyvinylalkohol, mit der Maßgabe, dass die kombinierten Mengen von Ausgangsmaterialien (G) und (H) > 0,1 Gewichtsteil, pro 100 Gewichtsteile Ausgangsmaterial (A), sind; und
mit der Maßgabe, dass die Emulsion frei von Stabilisatoren, die aus aliphatischen Polyethern, (Co)Polyacrylamiden, Polysacchariden und Polyacrylaten ausgewählt sind, und frei von nicht reaktiven Organopolysiloxanen ist.

2. Emulsion nach Anspruch 1, wobei (B) das Polyorganohydrogensiloxan eine Einheitsformel (R¹₃SiO_{1/2})_{w}(R¹₂R³HiO_{1/2})ₓ(R¹₂SiO_{2/2})_{y}(R¹HSiO_{2/2})_{z} aufweist, wobei Index w 0, 1 oder 2 ist; Index x 0,1 oder 2 ist; Index y 0 bis 250 ist und Index z 1 bis 250 ist; mit den Maßgaben, dass (w + x) = 2; (x + z) ≥ 3; und eine Menge (w + x + y + z) 10 bis 300 ist.

3. Emulsion nach Anspruch 1, wobei (C) der Hydrosilylierungsreaktionskatalysator aus der Gruppe ausgewählt ist, bestehend aus (C1) einem Metall, das aus der Gruppe ausgewählt ist, bestehend aus Platin, Rhodium, Ruthenium, Palladium, Osmium und Iridium; (C2) eine Verbindung des Metalls; (C3) ein Komplex des Metalls oder der Verbindung; und (C4) die Verbindung oder der Komplex, mikroverkapselt in einer Harzmatrix oder einer Kern-Schale-artigen Struktur.

4. Emulsion nach Anspruch 1, wobei (D) der Hydrosilylierungsreaktionsinhibitor aus der Gruppe ausgewählt ist, bestehend aus (D1) einem Acetylenalkohol, (D2) einem silylierten Acetylenalkohol, (D3) einer Eneyne-Verbindung, (D4) einem Triazol, (D5) einem Phosphin, (D6) einem Mercaptan, (D7) einem Hydrazin (D8) einem Amin, (D9) einem Fumarat, (D10) einem Maleat, (D11) einem Ether, (D12) Kohlenmonoxid und (D13) Kombinationen von zwei oder mehr davon.

5. Emulsion nach Anspruch 1, wobei das Ausgangsmaterial (F) eine ein- oder polyprotische Säure und ihre konjugierte Base umfasst.

6. Emulsion nach Anspruch 1, wobei Ausgangsmaterial (G) vorhanden ist und ein nichtionisches Tensid umfasst.

7. Emulsion nach Anspruch 1, wobei als Ausgangsmaterial (H) der Polyvinylalkohol vorhanden ist.

8. Emulsion nach Anspruch 1, ferner umfassend ein Ausgangsmaterial, das aus der Gruppe ausgewählt ist, bestehend aus (I) bis zu 1,0 Gewichtsteilen pro 100 Gewichtsteilen Ausgangsmaterial (A) ein Biozid, (J) bis zu 0,2 Gewichtsteilen pro 100 Gewichtsteilen Ausgangsmaterial (A) ein Antischaummittel oder sowohl (I) als auch (J).

9. Emulsion nach einem der vorstehenden Ansprüche, bei der:
Ausgangsmaterial (A1) das hexenylfunktionelle Polyorganosiloxan Einheitsformel (R¹₃SiO_{1/2})ₐ(R'₂R²SiO_{1/2})_{b}(R¹₂SiO_{2/2})_{c}(R¹R²SiO_{2/2})_{d} umfasst, wobei Index a 0, 1 oder 2 ist; Index b 0, 1 oder 2 ist; Index c 0 bis 400 ist; und Index d 0 bis 50 ist; mit den Maßgaben, dass (a + b) = 2 bis 4, (b + d) ≥ 2, und (a + b + c + d) 15 bis 400 ist; und
Ausgangsmaterial (A2) das vinylfunktionelle Polyorganosiloxan Einheitsformel (R¹₃SiO_{1/2})ᵢ(R¹₂R³SiO_{1/2})_{f}(R¹₂SiO_{2/2})_{g}(R¹R³SiO_{2/2})ₕ umfasst, wobei Index i 0, 1 oder 2 ist; Index f 0, 1 oder 2 ist; Index g 0 bis 1200 ist; und Index h 0 bis 200 ist; mit den Maßgaben, dass (i + f) = 2, (f + h) ≥ 2, (i + f + g + h) 15 bis 1200 ist.

10. Emulsion nach Anspruch 9, bei der:
Ausgangsmaterial (A1) zu 50 Gewichtsteile bis < 100 Gewichtsteile ein hexenylendblockiertes Polydialkylsiloxan von Einheitsformel (R¹₂R²SiO_{1/2})₂(R¹₂SiO_{2/2})_{c} ist, wobei Index c 15 bis 400 ist; und
Ausgangsmaterial (A2) zu > 0 bis 50 Gewichtsteile ein vinylendblockiertes Polydialkylsiloxan von Einheitsformel (R¹₂R³SiO_{1/2})₂(R¹₂SiO_{2/2})_{g} ist, wobei Index g 15 bis 1200 ist.

11. Emulsion nach Anspruch 9, bei der:
Ausgangsmaterial (A1) zu > 50 Gewichtsteile bis < 100 Gewichtsteile ein Poly(dialkyl/alkylhexenyl)siloxan von Einheitsformel (R²R¹₂SiO_{1/2})₂(R¹₂SiO_{2/2})_{c}(R¹R²SiO_{2/2})_{d} ist, wobei Index c 0 bis 400 ist, Index d 2 bis 50 ist, und
Ausgangsmaterial (A2) zu > 0 bis < 50 Gewichtsteile ein Poly(dialkyl/alkylvinyl)siloxan von Einheitsformel (R³R¹₂SiO_{1/2})₂(R¹₂SiO_{2/2})_{g}(R¹R³SiO_{2/2})ₕ ist, wobei Index g 0 bis 1200 ist; Index h 2 bis 200 ist.

12. Verwendung der Emulsion nach Anspruch 10 oder 11 auf einem Papiersubstrat.

13. Emulsion nach Anspruch 9, bei der:
Ausgangsmaterial (A1) zu > 25 Gewichtsteile bis < 100 Gewichtsteilen ein Poly(dialkyl/alkylhexenyl)siloxan von Einheitsformel (R²R¹₂SiO_{1/2})₂(R¹₂SiO_{2/2})_{c}(R¹R²SiO_{2/2})_{d} ist, wobei Index c 0 bis 400 ist, Index d 2 bis 50 ist, und
Ausgangsmaterial (A2) zu > 0 bis < 75 Gewichtsteile ein Poly(dialkyl/alkylvinyl)siloxan von Einheitsformel (R³R¹₂SiO_{1/2})₂(R¹₂SiO_{2/2})_{g}(R¹R³SiO_{2/2})ₕ ist, wobei Index g 0 bis 1200 ist; Index h 2 bis 200 ist.

14. Emulsion nach Anspruch 9, bei der:
Ausgangsmaterial (A1) ein Poly(dialkyl/alkylhexenyl)siloxan von Einheitsformel (R²R¹₂SiO_{1/2})₂(R¹₂SiO_{2/2})_{c}(R¹R²SiO_{2/2})_{d} ist, wobei Index c 0 bis 400 ist; und Index d 2 bis 50 ist; und
Ausgangsmaterial (A2) ein vinyldialkylsiloxyendblockiertes Polydialkylsiloxan von Einheitsformel (R¹₂R³SiO_{1/2})₂(R¹₂SiO_{2/2})_{g} ist, wobei R¹ eine Alkylgruppe ist, R³ eine Vinylgruppe ist und Index g 15 bis 1200 ist.

15. Verwendung der Emulsion nach Anspruch 13 oder 14 auf einem Kunststoffsubstrat.

## Revendications

1. Émulsion de revêtement antiadhésif en silicone comprenant
(A) 100 parties en poids d'une composition de polyorganosiloxane à insaturation aliphatique comprenant
(A1) 25 parties en poids à 100 parties en poids d'un polyorganosiloxane à fonctionnalité hexényle de formule unitaire
(R¹₃SiO_{1/2})ₐ(R¹₂R²SiO_{1/2})_{b}(R¹₂SiO_{2/2})_{c}(R¹R²SiO_{2/2})_{d}(SiO_{4/2})ₑ, où R¹ est un groupe alkyle, R² est un groupe hexényle, l'indice a vaut de 0 à 4, l'indice b vaut de 0 à 4, l'indice c vaut de 0 à 400, l'indice d vaut de 0 à 50, et l'indice e vaut 0 ou 1, à condition que (a + b) = 2 à 4, (b + d) ≥ 2, (a + b + c + d) vaille de 15 à 400, et
(A2) 0 à 75 parties en poids d'un polyorganosiloxane à fonctionnalité vinyle de formule unitaire (R¹₃SiO_{1/2})ᵢ(R¹₂R³SiO_{1/2})_{f}(R¹₂SiO_{2/2})_{g}(R¹R³SiO_{2/2})ₕ(SiO_{4/2})ⱼ, où R¹ est un groupe alkyle, R³ est un groupe vinyle, l'indice i vaut de 0 à 4 ; l'indice f vaut de 0 à 4 ; l'indice g vaut de 0 à 1400 ; l'indice h vaut de 0 à 200 ; et l'indice j vaut 0 ou 1 ; à condition que (i + f) = 2 à 4, (f + h) ≥ 2, et que (i + f + g + h) vaille de 15 à 1400 ;
(B) un polyorganohydrogénosiloxane, en une quantité suffisante pour obtenir un rapport molaire d'atomes d'hydrogène liés à du silicium dans la matière de départ (B) à une quantité combinée de groupes vinyle et hexényle dans la matière de départ (A) (c'est-à-dire un rapport SiH/Vi) de 1,2/1 à 3,0/1 ;
(C) un catalyseur de réaction d'hydrosilylation en une quantité suffisante pour obtenir 10 à 1 000 ppm d'un métal du groupe du platine sur la base des poids combinés des matières de départ (A) et (B) ;
(D) 0,02 partie en poids à 0,8 partie en poids, pour 100 parties en poids de la matière de départ (A), d'un inhibiteur de réaction d'hydrosilylation ;
(E) de l'eau ;
(F) 0,4 partie en poids à 1,6 partie en poids, pour 100 parties en poids de la matière de départ (A), d'un agent tampon ; (G) 0 à 3,0 parties en poids, pour 100 parties en poids de la matière de départ (A), d'un agent tensioactif ; et (H) 0 à 10,0 parties en poids, pour 100 parties en poids de la matière de départ (A), d'un alcool polyvinylique, à condition que les quantités combinées des matières de départ (G) et (H) soient > 0,1 partie en poids, pour 100 parties en poids de la matière de départ (A) ; et
à condition que l'émulsion soit exempte de stabilisants choisis parmi les polyéthers aliphatiques, les (co)polyacrylamides, les polysaccharides, et les polyacrylates et exempte d'organopolysiloxanes non réactifs.

2. Émulsion selon la revendication 1, où (B) le polyorganohydrogénosiloxane a la formule unitaire (R¹₃SiO_{1/2})_{w}(R¹₂R³SiO_{1/2})ₓ(R¹₂SiO_{2/2})_{y}(R¹HSiO_{2/2})_{z}, où l'indice w vaut 0, 1, ou 2 ; l'indice x vaut 0,1, ou 2 ; l'indice y vaut de 0 à 250, et l'indice z vaut de 1 à 250 ; à condition que (w + x) = 2 ; (x + z) ≥ 3 ; et une quantité (w + x + y + z) vaille de 10 à 300.

3. Émulsion selon la revendication 1, où (C) le catalyseur de réaction d'hydrosilylation est choisi dans le groupe constitué de (C1) un métal choisi dans le groupe constitué de platine, rhodium, ruthénium, palladium, osmium, et indium ; (C2) un composé du métal ; (C3) un complexe du métal ou du composé ; et
(C4) le composé ou le complexe microencapsulé dans une matrice de résine ou une structure de type coeur-écorce.

4. Émulsion selon la revendication 1, où (D) l'inhibiteur de réaction d'hydrosilylation est choisi dans le groupe constitué de (D1) un alcool acétylénique, (D2) un alcool acétylénique silylé, (D3) un composé ène-yne, (D4) un triazole, (D5) une phosphine, (D6) un mercaptan, (D7) une hydrazine, (D8) une amine, (D9) un fumarate, (D10) un maléate, (D11) un éther, (D12) du monoxyde de carbone, et (D13) une combinaison de deux ou plus de ceux-ci.

5. Émulsion selon la revendication 1, où la matière de départ (F) comprend un acide mono- ou poly-protique et sa base conjuguée.

6. Émulsion selon la revendication 1, où la matière de départ (G) est présente et comprend un agent tensioactif non ionique.

7. Émulsion selon la revendication 1, où la matière de départ (H), l'alcool polyvinylique, est présente.

8. Émulsion selon la revendication 1, comprenant en outre une matière de départ choisie dans le groupe consistant en (I) jusqu'à 1,0 partie en poids, pour 100 parties en poids de la matière de départ (A), d'un biocide, (J) jusqu'à 0,2 partie en poids, pour 100 parties en poids de la matière de départ (A), d'un anti-mousse, ou à la fois (I) et (J).

9. Émulsion selon l'une quelconque des revendications précédentes, où :
la matière de départ (A1), le polyorganosiloxane à fonctionnalité hexényle, comprend la formule unitaire (R¹₃SiO_{1/2})ₐ(R¹₂R²SiO_{1/2})_{b}(R¹₂SiO_{2/2})_{c}(R¹R²SiO_{2/2})_{d}, où l'indice a vaut 0, 1 ou 2 ; l'indice b vaut 0, 1 ou 2 ; l'indice c vaut de 0 à 400 ; et l'indice d vaut de 0 à 50 ; à condition que (a + b) = 2 à 4, (b + d) ≥ 2, et (a + b + c + d) vaille de 15 à 400 ; et
la matière de départ (A2), le polyorganosiloxane à fonctionnalité vinyle, comprend la formule unitaire (R¹₃SiO_{1/2})ᵢ(R¹₂R³SiO_{1/2})_{f}(R¹₂SiO_{2/2})_{g}(R¹R³SiO_{2/2})ₕ, où l'indice i vaut 0, 1, ou 2 ; l'indice f vaut 0, 1, ou 2 ; l'indice g vaut de 0 à 1 200 ; et l'indice h vaut de 0 à 200 ; à condition que (i + f) = 2, (f + h) ≥ 2, (i + f + g + h) vaille de 15 à 1 200.

10. Émulsion selon la revendication 9, où :
la matière de départ (A1) est constituée de 50 parties en poids à < 100 parties en poids d'un polydialkylsiloxane à blocs d'extrémité hexényle de formule unitaire (R¹₂R²SiO_{1/2})₂(R¹₂SiO_{2/2})_{c}, où l'indice c vaut de 15 à 400 ; et
la matière de départ (A2) est constituée de > 0 à 50 parties en poids d'un polydialkylsiloxane à blocs d'extrémité vinyle de formule unitaire (R¹₂R³SiO_{1/2})₂(R¹₂SiO_{2/2})_{g}, où l'indice g vaut de 15 à 1 200.

11. Émulsion selon la revendication 9, où :
la matière de départ (A1) est constituée de > 50 parties en poids à < 100 parties en poids d'un poly(dialkyl/alkylhexényl)siloxane de formule unitaire (R²R¹₂SiO_{1/2})₂(R¹₂SiO_{2/2})_{c}(R¹R²SiO_{2/2})_{d}, où l'indice c vaut de 0 à 400, l'indice d vaut de 2 à 50, et
la matière de départ (A2) est constituée de > 0 à < 50 parties en poids d'un poly(dialkyl/alkylvinyl)siloxane de formule unitaire (R³R¹₂SiO_{1/2})₂(R¹₂SiO_{2/2})_{g}(R¹R³SiO_{2/2})ₕ, où l'indice g vaut de 0 à 1 200 ; l'indice h vaut de 2 à 200.

12. Utilisation de l'émulsion selon la revendication 10 ou la revendication 11 sur un substrat de papier.

13. Émulsion selon la revendication 9, où :
la matière de départ (A1) est constituée de > 25 parties en poids à < 100 parties en poids d'un poly(dialkyl/alkylhexényl)siloxane de formule unitaire (R²R¹₂SiO_{1/2})₂(R¹₂SiO_{2/2})_{c}(R¹R²SiO_{2/2})_{d}, où l'indice c vaut de 0 à 400, l'indice d vaut de 2 à 50, et
la matière de départ (A2) est constituée de > 0 à < 75 parties en poids d'un poly(dialkyl/alkylvinyl)siloxane de formule unitaire (R³R¹₂SiO_{1/2})₂(R¹₂SiO_{2/2})_{g}(R¹R³SiO_{2/2})ₕ, où l'indice g vaut de 0 à 1 200 ; l'indice h vaut de 2 à 200.

14. Émulsion selon la revendication 9, où :
la matière de départ (A1) est un poly(dialkyl/alkylhexényl)siloxane de formule unitaire (R²R¹₂SiO_{1/2})₂(R¹₂SiO_{2/2})_{c}(R¹R²SiO_{2/2})_{d}, où l'indice c vaut de 0 à 400 ; et l'indice d vaut de 2 à 50 ; et
la matière de départ (A2) est un polydialkylsiloxane à blocs d'extrémité vinyldialkylsiloxy de formule unitaire (R¹₂R³SiO_{1/2})₂(R¹₂SiO_{2/2})_{g}, où R¹ est un groupe alkyle, R³ est un groupe vinyle, et l'indice g vaut de 15 à 1 200.

15. Utilisation de l'émulsion selon la revendication 13 ou la revendication 14 sur un substrat plastique.
